# FASCICULE DE BREVET EUROPEEN

(11) **EP 3 902 642 B1**
(45) Date de publication et mention de la délivrance du brevet: **23.11.2022**
(21) Numéro de dépôt: 19842873.2
(22) Date de dépôt: 18.12.2019
(51) Int. Cl.: B21F 15/04, B21F 15/06, B29D 30/48, B21F 11/00

(54) **DISPOSITIF DE FABRICATION DE TRINGLES POUR PNEUMATIQUES PAR SERTISSAGE D'UN FIL TRESSÉ, AVEC REPÉRAGE OPTIQUE DU POINT DE COUPE ET DE SERTISSAGE ET PROCÉDÉ DE POSITIONNEMENT D'UN TORE TRESSÉ.**
VORRICHTUNG ZUR HERSTELLUNG VON WULSTKERNEN FÜR REIFEN DURCH CRIMPEN EINES GEFLOCHTENEN DRAHTES, MIT OPTISCHER VERFOLGUNG DES SCHNEID- UND CRIMPPUNKTES UND VERFAHREN ZUM POSITIONIEREN EINES GEFLOCHTENEN DRAHTES
DEVICE FOR PRODUCING BEAD CORES FOR TYRES BY CRIMPING A BRAIDED WIRE, WITH OPTICAL TRACKING OF THE CUTTING AND CRIMPING POINT AND AND METHOD FOR POSITIONING A BRAIDED WIRE

(30) Priorité: 27.12.2018 FR 1874246; 31.01.2019 FR 1900955
(43) Date de publication de la demande: 03.11.2021
(73) Titulaire: COMPAGNIE GENERALE DES ETABLISSEMENTS MICHELIN, 63040 Clermont-Ferrand (FR)
(72) Inventeur: BERLIOUX, Loïc, 63040 Clermont-Ferrand Cedex 9 (FR); NEMESIN, Dominique, 63040 Clermont-Ferrand Cedex 9 (FR); AMYOT, Christophe, 63040 Clermont-Ferrand Cedex 9 (FR)
(74) Mandataire: Redouté, Gilles Pierre
(86) Numéro de dépôt international: PCT/FR2019/053138
(87) Numéro de publication internationale: WO 2020/136323

(56) Documents cités:
- JP-A- 2007 160 640
- US-A- 2 708 228
- US-A- 5 328 533

## Description

La présente invention concerne le domaine de la fabrication des tringles de renfort qui sont destinées à renforcer des bandages, notamment des bandages pneumatiques, afin d'assurer la tenue de tels bandages sur une jante.

De façon connue en soi, une tringle se présente sous la forme d'un élément annulaire en matériau rigide, généralement métallique, qui peut être constitué d'un toron comprenant plusieurs brins entrelacés.

Des dispositifs de fabrication d'un élément annulaire de tringle destiné à renforcer un bandage sont connus par les documents US 2 708 228 et JP 2007 160 640 A.

Lors de la fabrication d'une tringle, il est donc connu de prévoir une étape de tressage au cours de laquelle on enroule un fil de tresse en spires hélicoïdales, autour d'une âme qui est fermée en anneau sur elle-même, de sorte à obtenir un tore tressé, puis de fixer l'une à l'autre les extrémités dudit fil de tresse, par exemple au moyen d'un manchon serti, afin d'assurer la cohésion du tore tressé sous forme d'un élément annulaire qui constituera la tringle.

A cet effet, il est nécessaire d'ajuster, par une opération de coupe, la longueur des extrémités du fil de tresse, puis d'engager sur lesdites extrémités le manchon à sertir.

Ces opérations sont parfois délicates, ce qui peut les rendre relativement lentes et difficilement reproductibles d'une tringle à l'autre.

En outre, il arrive que le manchon soit mal placé sur les extrémités du fil de tresse, ce qui conduit à une mise au rebut de la tringle, et ainsi à un gaspillage de matière première et d'énergie.

Les objets assignés à l'invention visent par conséquent à remédier aux inconvénients susmentionnés, et à proposer un dispositif de fabrication qui permette de réaliser des éléments de tringle de manière rapide, fiable, précise et reproductible.

Les objets assignés à l'invention sont atteints au moyen d'un dispositif de fabrication d'un élément annulaire de tringle destiné à renforcer un bandage, notamment un bandage pneumatique, ledit dispositif comprenant un poste d'assemblage qui est agencé d'une part pour recevoir un tore tressé comprenant au moins un fil, dit « fil de tresse », qui s'étend longitudinalement depuis un premier tronçon d'extrémité jusqu'à un second tronçon d'extrémité et qui est entrelacé en spires hélicoïdales autour de, et le long de, une ligne génératrice qui forme un anneau autour d'un axe principal qui correspond à l'axe central dudit tore tressé, et d'autre part pour réunir et fixer l'un à l'autre le premier tronçon d'extrémité et le second tronçon d'extrémité de sorte à assurer la cohésion du tore tressé en un élément annulaire de tringle, ledit dispositif étant caractérisé en ce qu'il comporte un système de positionnement qui permet d'ajuster automatiquement la position du tore tressé par rapport au poste d'assemblage et qui comprend à cet effet :
- une unité d'entraînement qui est agencée pour entraîner en déplacement le tore tressé par rapport au poste d'assemblage,
- une unité d'écartement qui est agencée pour faire saillir, par déformation élastique, les premier et second tronçons d'extrémité par rapport au reste du tore tressé, dit « corps du tore tressé », et maintenir lesdits tronçons d'extrémité en saillie du corps du tore tressé pendant que ledit tore tressé est entraîné en déplacement par l'unité d'entraînement,
- un capteur de tronçon d'extrémité qui est placé de manière à pouvoir détecter la présence ou le passage du tronçon d'extrémité saillant concerné en un point de repérage qui est défini par ledit capteur de tronçon d'extrémité et qui constitue une référence connue par rapport au poste d'assemblage.

Avantageusement, l'invention permet de repérer de manière automatique, fiable, reproductible, et non dommageable pour le tore tressé, la position dudit tore tressé dans le référentiel du dispositif d'assemblage.

De la sorte, l'ensemble des opérations subséquentes nécessaires à l'assemblage, et notamment les opérations de coupe permettant d'ajuster la longueur des tronçons d'extrémité, puis les opérations de fixation desdits tronçons d'extrémités, ici de préférence par pose et sertissage d'un manchon, sont réalisées dans des conditions bien maîtrisées, et peuvent être exécutées de manière rapide, automatique, tout en garantissant un faible taux de rebut, ce qui améliore significativement le rendement de fabrication des tringles.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue d'ensemble en perspective, un exemple de dispositif de fabrication selon l'invention.
La figure 2 illustre, selon une vue de détail en perspective, un sous-ensemble formant une partie du dispositif de la figure 1 et portant des capteurs à fibres optiques.
La figure 3 illustre, selon une vue de détail du dessus, la détection d'un tronçon d'extrémité par un premier capteur à fibre optique au sein du dispositif de la figure 1.
La figure 4 est une vue de détail du dispositif de la figure 3 en coupe de côté, dans un plan de coupe contenant le faisceau de détection du premier capteur à fibre optique.

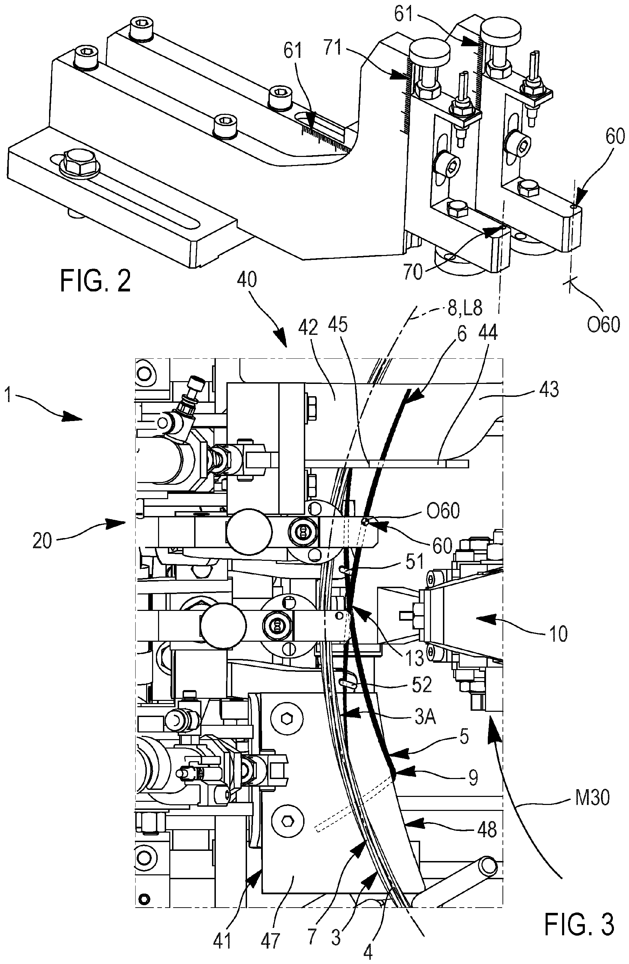

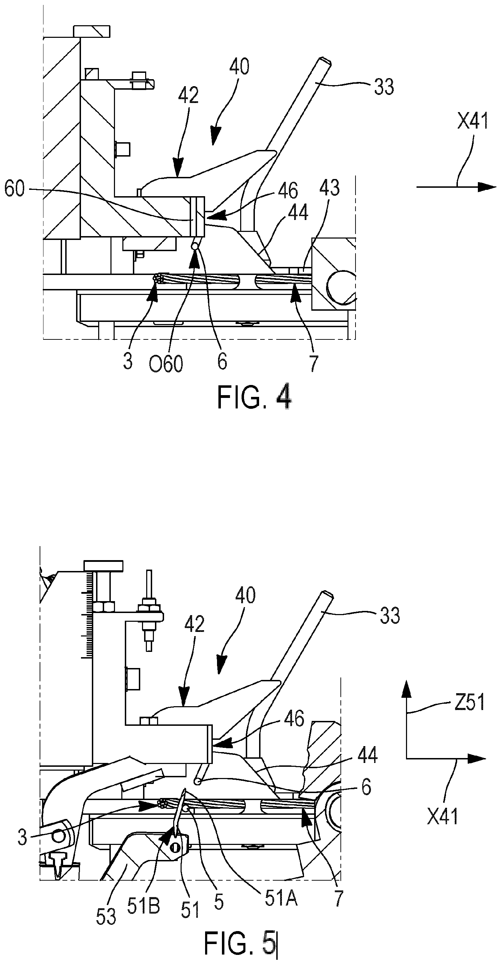

La figure 5 est une vue de détail du dispositif de la figure 3, en coupe de côté, faisant apparaître d'une part un organe écarteur de type palette appartenant à un premier jeu d'organes écarteurs qui sont conçus pour écarter du corps du tore tressé un tronçon d'extrémité du fil de tresse afin de placer ledit tronçon d'extrémité en saillie du corps du tore tressé pour permettre la détection dudit tronçon d'extrémité par le capteur, et d'autre part un organe écarteur de type doigt de retenue appartenant à un second jeu d'organes écarteurs qui sont conçus pour maintenir ledit tronçon d'extrémité en saillie du corps du tore tressé pendant que l'unité de d'entraînement déplace et positionne ledit tore tressé en vis-à-vis d'un outil de coupe et/ou d'un outil de jonction.
La figure 6 illustre, selon une vue schématique de dessus, le premier jeu d'organes écarteurs en position initiale par rapport au tore tressé, avant qu'ils n'engagent les tronçons d'extrémité.
La figure 7 illustre, selon une vue schématique en coupe de côté, le tore tressé dans la configuration qui correspond à la figure 6.
La figure 8 illustre, selon une vue schématique de dessus, l'intervention des organes écarteurs du premier jeu afin de capturer les premier et second tronçons d'extrémité et d'écarter ces derniers du corps du tore tressé.
La figure 9 illustre, selon une vue schématique en coupe de côté, le tore tressé dans la configuration qui correspond à la figure 8.
La figure 10 illustre, selon une vue schématique de dessus, un déplacement du tore tressé, ici en rotation azimutale, qui est opéré par l'unité d'entraînement selon une première phase de recherche afin de détecter un tronçon d'extrémité au moyen du capteur de tronçon d'extrémité, tandis que les premier et second tronçons d'extrémité saillants sont soutenus en appui glissant par des palettes formant les organes écarteurs du premier jeu.
La figure 11 illustre, selon une vue schématique en coupe de côté, le tore tressé dans la configuration qui correspond à la figure 10.
La figure 12 illustre, selon une vue schématique de dessus, l'intervention des doigts de retenue formant les organes écarteurs du second jeu qui se positionnent entre le corps du tore tressé et les premier et second tronçons d'extrémité, dans l'espace créé par les organes écarteurs du premier jeu, afin de pouvoir soutenir lesdits premier et second tronçons d'extrémité.
La figure 13 illustre, selon une vue schématique en coupe de côté, le tore tressé lors de la manœuvre d'insertion des organes écarteurs du second jeu correspondant à la figure 12.
La figure 14 illustre, selon une vue schématique de dessus, un déploiement secondaire des organes écarteurs du second jeu à l'encontre des premier et second tronçons d'extrémité, ici par ouverture angulaire des doigts de retenue, puis le retrait des organes écarteurs du premier jeu, à savoir les palettes, auxquelles sont ainsi substitués les doigts de retenue.
La figure 15 illustre, selon une vue schématique en coupe de côté, le maintien en saillie d'un tronçon d'extrémité obtenu par l'appui procuré par un organe écarteur du second jeu, ici un doigt de retenue, déployé conformément à la configuration de la figure 14.
La figure 16 illustre, selon une vue schématique de dessus, l'opération de coupe qui permet d'ajuster la longueur des premier et second tronçons d'extrémité, après que le tore tressé a été convenablement positionné en vis-à-vis d'un outil de coupe, et tandis que les premier et second tronçons d'extrémité sont toujours soutenus par l'unité d'écartement, ici par les doigts de retenue formant les organes écarteurs du second jeu.
La figure 17 est une vue schématique en coupe de côté de la configuration de la figure 16.
La figure 18 illustre, selon une vue schématique de dessus, le dégagement en retrait du tore tressé, dont les premier et second tronçons d'extrémité sont toujours soutenus par les organes écarteurs du second jeu, pour permettre au système de positionnement de permuter les outils de coupe et de jonction, de sorte à placer l'outil de jonction en position pour recevoir le tore tressé, en lieu et place de l'outil de coupe.
La figure 19 est une vue schématique en coupe de côté de la configuration de la figure 18.
La figure 20 illustre, selon une vue schématique de dessus, une opération de jonction des premier et second tronçons d'extrémité, ici par sertissage d'un manchon, tandis que lesdits premier et second tronçons d'extrémité sont toujours soutenus par l'unité d'écartement, ici par les doigts de retenue formant les organes écarteurs du second jeu.
La figure 21 est une vue schématique en coupe de côté de la configuration de la figure 20.
La figure 22 illustre, selon une vue schématique de dessus, le dégagement hors de l'outil de jonction du fil de tresse équipé de son manchon, en attente du contrôle de présence de manchon.
La figure 23 illustre, selon une vue de détail du dessus, la détection, au moyen d'un second capteur à fibre optique, de la présence d'un manchon serti sur le tore tressé, afin de s'assurer de la conformité de l'élément annulaire de tringle obtenu après l'opération de jonction.
La figure 24 illustre, selon une vue partielle en perspective, un élément annulaire de tringle obtenu conformément à l'invention, après que les premier et second tronçons d'extrémité et le manchon qui les lie soient revenus, par retour élastique, contre le corps du tore tressé.
La figure 25 illustre, selon une vue schématique de la face radialement interne du tore tressé, le croisement des premier et second tronçons d'extrémité qui est obtenu par la mise en saillie desdits tronçons d'extrémité au moyen de l'unité d'écartement.

La présente invention concerne un dispositif 1 de fabrication d'un élément annulaire de tringle 2.

Un tel élément annulaire de tringle 2 est destiné à renforcer un bandage, notamment un bandage pneumatique.

A titre d'exemple, ces éléments annulaires de tringle 2, destinés à assurer la tenue de tels bandages pneumatiques sur une jante, peuvent être adaptés pour équiper des bandages pneumatiques dont les dimensions, ici plus particulièrement le diamètre de jante auquel correspond le diamètre de l'élément annulaire de tringle 2, sont comprises entre 13 pouces et 24 pouces. L'invention est bien entendu applicable à la fabrication de tringles 2 destinées à des bandages pneumatiques pour des véhicules de tourisme, notamment dans les dimensions susmentionnés, mais également à la fabrication de tringles destinées à des bandages pneumatiques pour poids-lourds, ou pour engins de génie civil.

Le dispositif comprend un poste d'assemblage 10.

Ce poste d'assemblage 10 est agencé pour recevoir un tore tressé 3 comprenant au moins un fil, dit « fil de tresse » 4, qui s'étend longitudinalement depuis un premier tronçon d'extrémité 5 jusqu'à un second tronçon d'extrémité 6 et qui est entrelacé en spires hélicoïdales 7 autour de, et le long de, une ligne génératrice L8 qui forme un anneau, de préférence circulaire, autour d'un axe principal qui correspond à l'axe central Z3 dudit tore tressé.

Le fil de tresse 4 est de préférence un fil métallique. En variante, ledit fil de tresse 4 pourrait, sans sortir du cadre de l'invention, être réalisé en tout matériau adéquat, présentant un module de traction (Module d'Young) suffisamment élevé, et notamment en un matériau polymère adéquat, ou en un mélange adéquat de matériaux polymères, ou bien encore en matériau composite de métal et polymère.

Le fil de tresse 4 pourra de préférence présenter un diamètre de section compris entre 1,20 mm et 3,5 mm, et par exemple choisi parmi 1,30 mm, 1,55 mm, 1,75 mm 2,00 mm et 3,00 mm.

Le fil de tresse 4 pourra être conformé lors d'une étape préalable de tressage, au cours de laquelle on mettra en forme les spires hélicoïdales 7 pour obtenir le tore tressé 3.

Le fil de tresse 4 s'étend avantageusement en continu, c'est-à-dire d'un seul tenant, depuis le premier tronçon d'extrémité 5, qui précède les spires hélicoïdales 7, jusqu'au second tronçon d'extrémité 6, qui vient à la suite des spires hélicoïdales 7, et ledit fil de tresse 4 réalise plusieurs tours complets en azimut autour de l'axe central Z3, chaque tour réalisé ayant pour effet d'ajouter une section dudit fil de tresse 4 à la section globale du tore tressé 3.

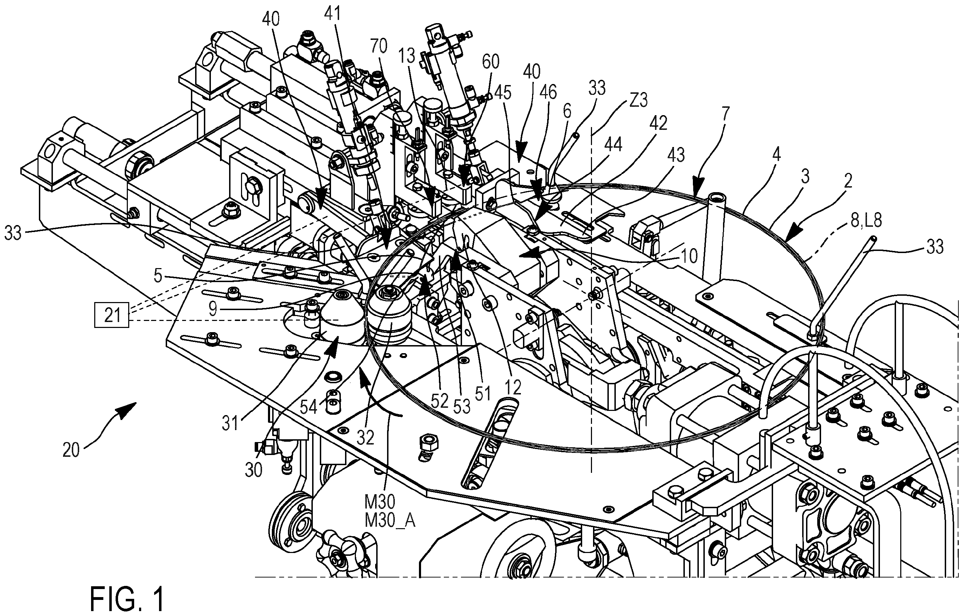

En pratique, la ligne génératrice L8, qui est représentée en traits mixte sur les figures 1, 3 23, 24 et 25, pourra de préférence être matérialisée par une âme 8 qui est fermée en anneau sur elle-même, de préférence sous une forme circulaire, autour de l'axe principal Z3.

Ladite âme 8 forme avantageusement un support de tressage, autour et le long duquel on enroule le fil de tresse 4 en spires hélicoïdales 7, tel que dit plus haut.

Ladite âme 8 peut-être monobrin, c'est-à-dire formée d'un seul fil d'âme monolithique, ou, en variante, multibrins, c'est-à-dire formée d'une pluralité de fils d'âme entrelacés.

L'âme 8, ou les fils d'âme, pourront être formés dans tout matériau approprié, suffisamment rigide et possédant une résistance à la rupture en traction supérieure à un seuil prédéterminé.

De préférence, l'âme 8, ou les fils d'âme, seront métalliques, par exemple en acier.

En variante, on pourrait toutefois utiliser un autre matériau, par exemple un polymère adéquat, ou un mélange de polymères adéquat, ou un composite métal-polymère, sans sortir du cadre de l'invention.

Par convention, on pourra désigner le premier tronçon d'extrémité 5 par le terme « crochet » 5, et le second tronçon d'extrémité 6 par l'expression « fil libre 6 ».

En effet, tel que cela est bien visible sur les figures 1, 3, 6, 8, 10, 12 et 14, le premier tronçon d'extrémité 5 présentera de préférence un coude 9, formant de préférence un angle compris entre 80 degrés et 120 degrés, qui confère audit premier tronçon d'extrémité 5 une forme en crochet.

Une telle forme de crochet permet entre autres avantageusement audit premier tronçon d'extrémité 5, qui forme un tronçon excédentaire de fil de tresse qui précède les spires hélicoïdales 7, de venir en appui stable contre l'âme 8 au début de l'opération de tressage, ce qui facilite la mise en forme, par enroulement hélicoïdal autour de l'âme 8, de la portion du fil de tresse 4 qui vient à la suite dudit premier tronçon d'extrémité 5 pour former lesdites spires hélicoïdales 7.

De même, le second tronçon d'extrémité 6 correspondra également à un tronçon excédentaire de fil de tresse 4, qui s'étend au-delà des spires hélicoïdales 7, et par lequel on achève l'opération de tressage, si bien que ledit second tronçon d'extrémité 6 forme une extrémité libre du fil de tresse 4.

Le poste d'assemblage 10 selon l'invention est en outre agencé pour réunir et fixer l'un à l'autre le premier tronçon d'extrémité 5 et le second tronçon d'extrémité 6 de sorte à assurer la cohésion du tore tressé 3 en un élément annulaire de tringle 2.

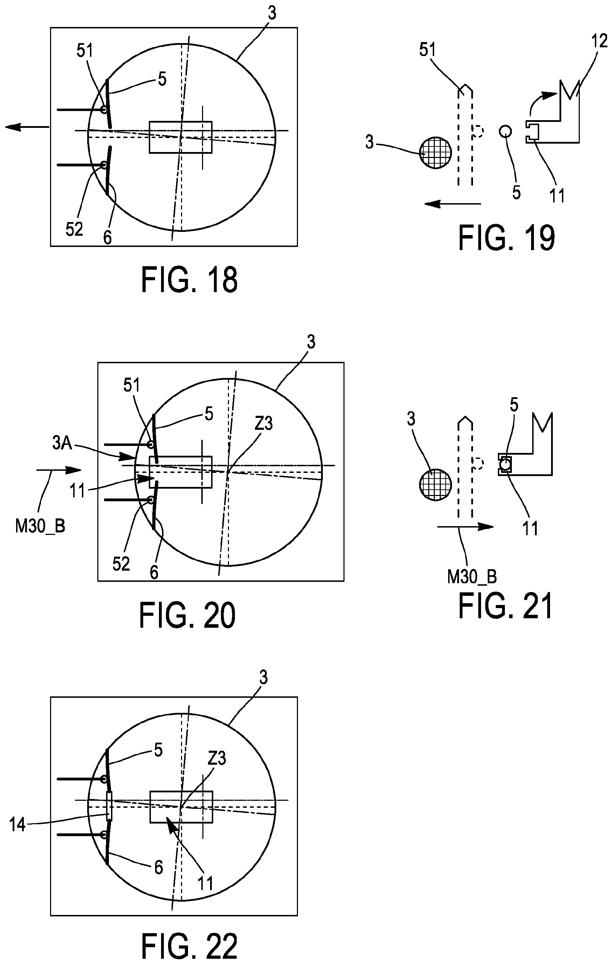

A cet effet, le poste d'assemblage 10 comprend de préférence, tel que cela est schématisé sur les figures 19, 20, 21 et 22, un outil de jonction 11.

Dans l'absolu, on pourrait envisager tout type d'outil de jonction 11 approprié, par exemple un outil de jonction par soudage.

Toutefois, plus préférentiellement, le poste d'assemblage 10 comprend un outil 11 de jonction par sertissage qui réalise la jonction entre le premier tronçon d'extrémité 5 et le second tronçon d'extrémité 6 en sertissant sur le fil de tresse 4 un manchon 14 qui réunit et fixe l'un à l'autre lesdits premier et second tronçons d'extrémité 5, 6, tel que cela est illustré sur les figures 22, 23 et 24.

L'outil de jonction 11 pourra à cet effet comporter une pince de sertissage, agencée pour venir appliquer et refermer le manchon 14 sur les premier et second tronçons d'extrémité 5, 6 par déformation plastique.

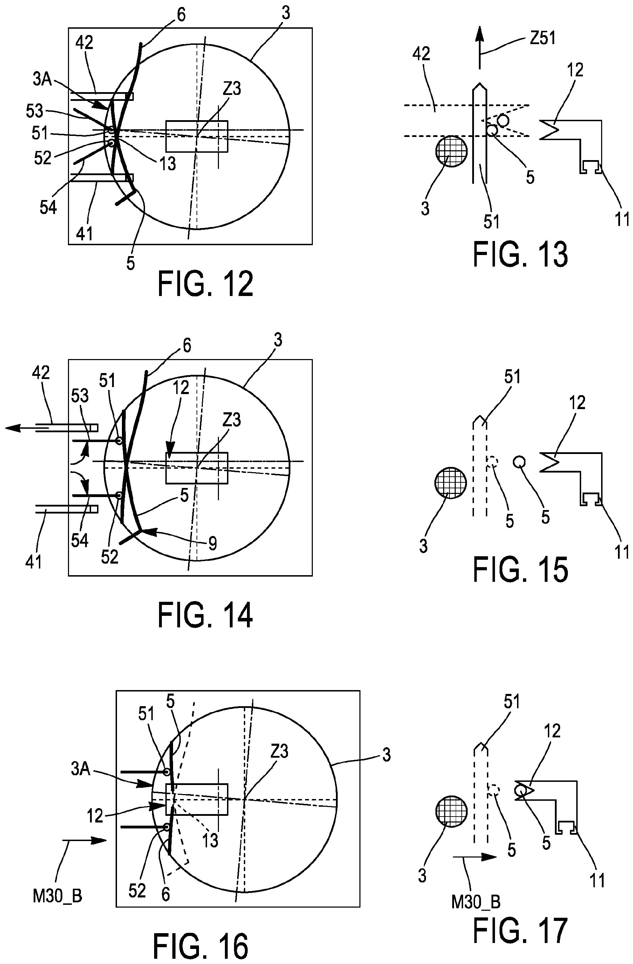

Selon une variante de réalisation préférentielle, le poste d'assemblage 10 comprend un outil de coupe 12 qui est agencé pour ajuster, par sectionnement du fil de tresse 4 au niveau des premier et second tronçons d'extrémité 5, 6, les longueurs respectives desdits premier et second tronçons d'extrémité 5, 6, tel que cela est illustré sur la figure 16.

L'outil de coupe 12 peut typiquement comprendre des mors formant des pinces coupantes, qui viennent sectionner les tronçons d'extrémité 5, 6.

L'outil de jonction 11 peut alors de préférence être agencé de manière à pouvoir réunir et fixer l'un à l'autre le premier tronçon d'extrémité 5 et le second tronçon d'extrémité 6 suite à l'ajustement en longueur desdits tronçons d'extrémité 5, 6 par l'outil de coupe 12.

Selon l'invention, le dispositif 1 comporte un système de positionnement 20 qui permet d'ajuster automatiquement la position du tore tressé 3 par rapport au poste d'assemblage 10 et qui comprend à cet effet :
- une unité d'entraînement 30 qui est agencée pour entraîner en déplacement le tore tressé 3 par rapport au poste d'assemblage 10,
- une unité d'écartement 40 qui est agencée pour faire saillir, par déformation élastique, les premier et second tronçons d'extrémité 5, 6 par rapport au reste du tore tressé 3, dit « corps du tore tressé » 3A, et pour maintenir lesdits premier et second tronçons d'extrémité 5, 6 en saillie du corps du tore tressé 3A pendant que ledit tore tressé 3 est entraîné en déplacement M30 par l'unité d'entraînement,
- un capteur de tronçon d'extrémité 60 qui est placé de manière à pouvoir détecter la présence ou le passage du tronçon d'extrémité 5, 6 saillant concerné en un point de repérage O60 qui est défini par ledit capteur de tronçon d'extrémité 60 et qui constitue une référence connue par rapport au poste d'assemblage 10.

Le point de repérage O60, tel qu'il est défini par l'agencement du capteur de tronçon d'extrémité 60, sera placé sur la trajectoire prévisible du premier tronçon d'extrémité 5 ou du second tronçon d'extrémité 6.

Cette trajectoire prévisible du tronçon d'extrémité 5, 6 concerné résultera de la mise en saillie dudit tronçon d'extrémité 5, 6, par l'unité d'écartement 40 et, le cas échéant, d'un mouvement complémentaire de déplacement M30, captif, et plus particulièrement d'une première phase de mouvement M30_A de rotation azimutale, comme on le verra ci-après, qui est exécuté par l'unité d'entraînement 30.

Par commodité d'agencement, on pourra choisir de conférer, au moins pendant l'exécution des mouvements visant à détecter le tronçon d'extrémité 5, 6, une position fixe au capteur de tronçon d'extrémité 60, et donc du point de repérage O60, dans un référentiel attaché au dispositif 1, de sorte que les unités motorisées d'écartement 40 et d'entraînement 30 génèrent des mouvements correspondants des tronçons d'extrémité 5, 6, et plus globalement des mouvements du tore tressé 3, qui ont pour effet de déplacer activement lesdits tronçons d'extrémité 5, 6 par rapport au capteur de tronçon d'extrémité 60.

La détection de la présence d'un tronçon d'extrémité 5, 6 au point de repérage O60 correspondra avantageusement à une prise de référence (ou « prise d'origine »), qui permettra de connaître avec précision, et de manière reproductible d'un tore tressé 3 à l'autre, la position dudit tore tressé 3 dans un référentiel associé au dispositif 1, et donc plus particulièrement de connaître avec précision la position dudit tore tressé 3 dans un référentiel associé au poste d'assemblage 10.

De la sorte, on pourra ainsi procéder aux opérations de coupe puis de jonction de manière précise et automatique, et traiter de manière reproductible, au sein du dispositif 1, une succession de tores tressés, chaque tore tressé 3 étant à son tour placé sur le dispositif 1, au sein duquel ledit tore tressé 3 est repéré et positionné automatiquement par le système de positionnement 20, de manière à pouvoir ensuite subir dans des conditions parfaitement contrôlées une opération de coupe (si nécessaire) puis une opération de jonction, et ainsi être transformé en un élément annulaire de tringle 2.

Avantageusement, la mise en saillie des tronçons d'extrémité 5, 6 permet d'éloigner lesdits tronçons d'extrémité 5, 6 de la surface du corps 3A du tore tressé, formé par la superposition des spires hélicoïdales 7, et plus particulièrement de décoller lesdits tronçons d'extrémité 5, 6 de la surface dudit corps 3A du tore tressé contre laquelle lesdits tronçons d'extrémité 5, 6 reposent initialement, et ce de manière suffisante pour permettre au capteur de tronçon d'extrémité 60 de distinguer le tronçon d'extrémité 5, 6 du reste du tore tressé 3, et notamment dudit corps 3A du tore tressé.

De préférence, la flexion des tronçons d'extrémité 5, 6 provoquée par l'action de l'unité d'écartement sera strictement élastique, en ceci que les contraintes générées par cette action dans le fil de tresse 4 ne dépasseront pas la limite d'élasticité à 0,2% d'allongement résiduel, dite usuellement « Rp0,2 », du matériau constitutif du fil de tresse 4, et ce de manière à ne pas causer de déformation permanente des tronçons d'extrémité 5, 6, et ainsi autoriser un retour élastique desdits tronçons d'extrémité 5, 6 contre le corps du tore tressé 3A après l'opération de jonction.

On notera également que la mise en saillie simultanée des tronçons d'extrémité 5, 6 est avantageusement réalisée de telle manière que le premier tronçon d'extrémité 5 et le second tronçon d'extrémité 6 se croisent en un point de croisement 13, qui se trouve ainsi décalé à distance du corps du tore tressé 3A, du fait du fléchissement élastique des tronçons d'extrémité 5, 6 sous l'action de l'unité d'écartement 40.

Plus préférentiellement, les tronçons d'extrémité 5, 6 seront de préférence fléchis en saillie vers l'intérieur du tore 3, c'est-à-dire en rapprochement de l'axe central Z3, par l'unité d'écartement 40, de telle sorte que, dans un plan de projection normal à l'axe central Z3, le point de croisement 13 qui résulte de la mise en saillie se trouvera radialement plus proche dudit axe central Z3 que la surface radialement interne du corps du tore tressé 3A formé par les spires hélicoïdales 7.

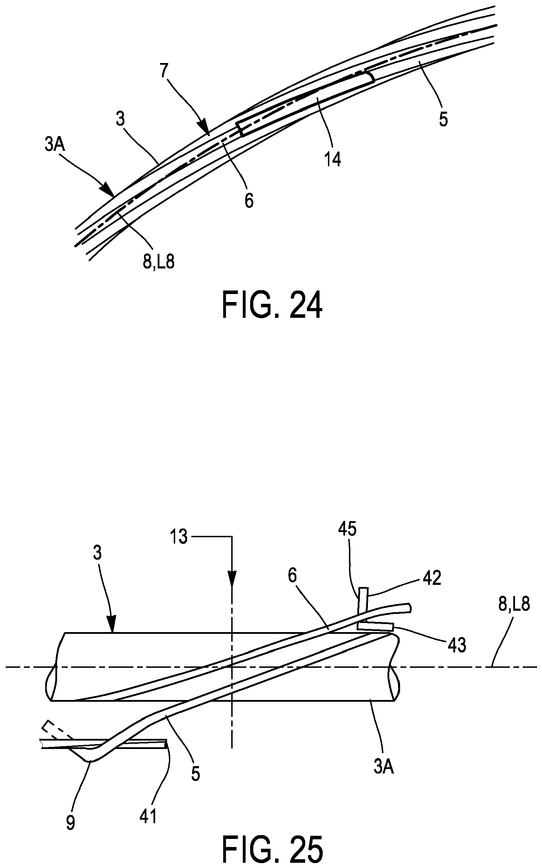

Un tel choix permet notamment de disposer par la suite le manchon 14 sur la face radialement interne du tore tressé 3, tel que cela est notamment visible sur la figure 24, ce qui évite que le manchon 14 ne provoque, en fonctionnement, une usure prématurée des nappes de renfort du bandage pneumatique, et plus particulièrement de la nappe carcasse dudit bandage pneumatique, par abrasion.

En pratique, l'opération de coupe puis l'opération de jonction devront être effectuées dans un secteur angulaire, considéré en azimut autour de l'axe central Z3, qui contient le point de croisement 13, et de préférence qui est sensiblement voire exactement centré sur le point de croisement 13.

Or, l'unité d'écartement 40 et l'unité d'entraînement 30 permettent avantageusement d'obtenir une configuration saillante des tronçons d'extrémité 5, 6 qui est sensiblement reproductible d'un tore tressé 3 à l'autre, et donc garantissent un positionnement reproductible du point de croisement 13 d'une part le long du tronçon d'extrémité 5, 6, tel que ce tronçon d'extrémité sera détecté par le capteur de tronçon d'extrémité 60, et d'autre part par rapport au corps du tore tressé 3A.

Ainsi, lorsque le capteur 60 détecte le passage du tronçon d'extrémité 5, 6 par le point de repérage O60, on est assuré que le point de croisement 13 se trouve dans un intervalle spatial qui est connu avec une précision suffisamment acceptable par rapport audit point de repérage 60 pour que l'on puisse considérer ce point de repérage 60 comme référence pour positionner le tore tressé 3 par rapport à l'outil de coupe 12 et/ou par rapport à l'outil de jonction 11 du poste d'assemblage 10.

Bien entendu, le système de positionnement 20 pourra comprendre une unité de commande 21, de préférence électronique, permettant de piloter et de coordonner automatiquement l'unité d'écartement 40, le capteur de tronçon d'extrémité 60, et l'unité d'entraînement 30.

De préférence, l'unité d'entraînement 30 est agencée pour entraîner le tore tressé 3 en rotation azimutale autour de l'axe central Z3 dudit tore tressé.

Un tel agencement confère notamment à l'unité d'entraînement 30 stabilité et compacité.

En particulier, un tel agencement permet avantageusement de disposer l'unité d'écartement 40 dans un espace situé radialement à l'extérieur du tore tressé 3 par rapport à l'axe central Z3, ce qui permet à ladite unité d'écartement 40 de venir agir sur le tore tressé 3, et plus particulièrement sur les tronçons d'extrémité 5, 6, par abord radial externe, tandis que l'espace radialement interne, contenu à l'intérieur du périmètre défini par le tore tressé 3 autour de l'axe central Z3, peut accueillir le poste d'assemblage 10, et plus particulièrement l'outil de coupe 12 et/ou l'outil de jonction 11, tel que cela est visible sur la figure 1.

Par commodité de description, on assimilera l'axe central de rotation azimutale défini par l'unité d'entraînement 30 et l'axe central Z3 du tore tressé 3 accueilli au sein de ladite unité d'entraînement 30.

De préférence, par souci de stabilité et de compacité, l'unité d'entraînement 30 sera agencée de manière à ce que le tore tressé 3, et plus particulièrement sa ligne génératrice L8, soit disposé horizontalement, ou sensiblement horizontalement, et entraîné en mouvement M30 de rotation azimutale à plat, l'axe central Z3 étant vertical, ou orienté sensiblement verticalement, par exemple selon une inclinaison comprise entre 0 degrés et 10 degrés par rapport à la verticale.

Bien entendu, l'unité d'entraînement 30 pourra comprendre tout organe permettant de réceptionner le tore tressé 3 puis de maintenir et de guider ledit tore tressé 3 dans une trajectoire captive prédéterminée par rapport au dispositif 1, et plus particulièrement par rapport au poste d'assemblage 10, ici plus préférentiellement dans un plan sensiblement horizontal contenant la ligne génératrice L8.

A titre d'exemple, l'unité d'entraînement 30 pourra comprendre, tel que cela est illustré sur la figure 1, un galet motorisé 31 qui coopère avec un galet d'appui 32 pour prendre en sandwich le tore tressé 3 et entraîner ce dernier par friction en rotation azimutale autour de son axe central Z3.

L'unité d'entraînement 30 pourra également comprendre des tiges de réception et de guidage 33, éventuellement complétées par des galets, qui permettront de centrer le tore tressé 3 sur l'axe central Z3 lors de la mise en place dudit tore tressé 3 sur le dispositif 1, et de guider ledit tore tressé selon la trajectoire prévue par l'unité d'entraînement 30, ici en particulier pour guider le tore tressé 3 en rotation azimutale autour de son axe central Z30.

De préférence, l'unité d'écartement 40 comprend au moins un premier jeu d'organes écarteurs 41, 42, de préférence des palettes 41, 42, qui sont montés mobiles par rapport à l'unité d'entraînement 30 de sorte à pouvoir capturer le premier tronçon d'extrémité 5 et le second tronçon d'extrémité 6 et déplacer par flexion élastique lesdits premier et second tronçons d'extrémité 5, 6 par rapport au corps du tore tressé 3A pour amener lesdits premier et second tronçons d'extrémité 5, 6 dans une configuration saillante par rapport audit corps du tore tressé 3A, tel que cela est illustré sur les figures 3, 4, 8 et 9.

Ainsi, ce premier jeu d'organes écarteur 41, 42, avantageusement placé sous le contrôle de l'unité de commande 21, pourra faire passer chacun des tronçons d'extrémité 5, 6 d'une première configuration initiale dite « configuration de repos », dans laquelle le tronçon d'extrémité 5, 6 considéré, et plus globalement chacun des deux tronçons d'extrémité 5, 6, est proche du corps du tore tressé 3A, et de préférence en partie accolé contre ledit corps du tore tressé 3A, à une seconde configuration dite « saillante », dans laquelle ledit tronçon d'extrémité 5, 6, et plus globalement les deux tronçons d'extrémité 5, 6, sont plus éloignés du corps du tore tressé qu'ils ne l'étaient en configuration de repos.

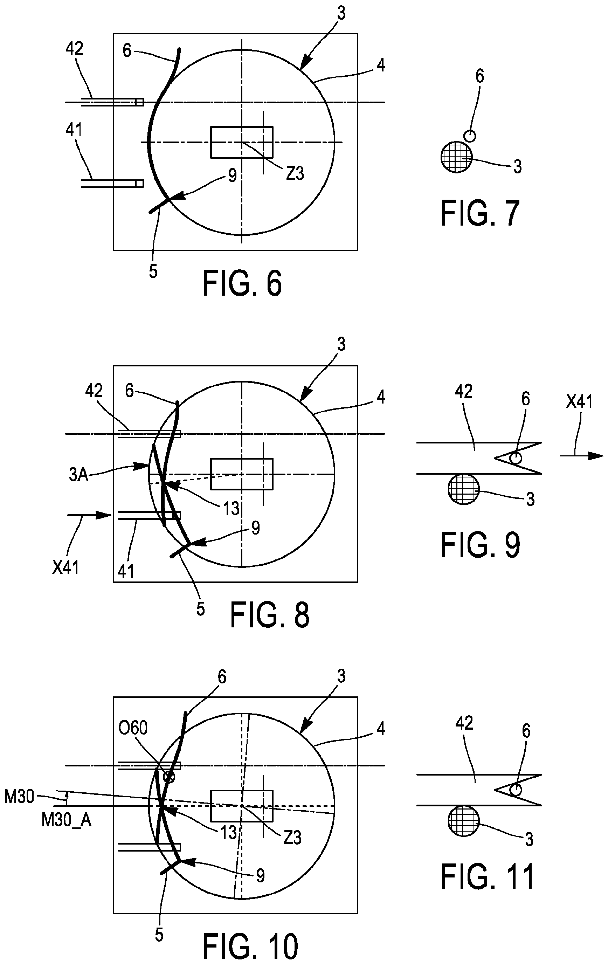

De préférence, les organes écarteurs 41, 42 du premier jeu sont également agencés pour maintenir les premier et second tronçons d'extrémité 5, 6 durant au moins une première phase M30_A du déplacement M30, qui correspond à une phase de déplacement de recherche M30_A au cours de laquelle le système de positionnement 20 déplace le tore tressé 3 de manière à faire passer par le point de repérage O60 un tronçon d'extrémité 6 saillant, pour pouvoir réaliser une prise de référence, tel que cela est illustré sur la figure 10.

Cette première phase de déplacement M30_A correspondra de préférence à une rotation azimutale du tore tressé 3 autour de son axe central Z3.

Plus préférentiellement, le premier jeu d'organes écarteurs 41, 42 comprendra une première palette 41, ou « palette de crochet » 41, agencée pour agir sur le premier tronçon d'extrémité 5, et une seconde palette 42, ou « palette de fil libre » 42, agencée pour agir sur le second tronçon d'extrémité 6.

Par simple commodité de description, on pourra assimiler les organes écarteurs du premier jeu aux palettes 41, 42 dans ce qui suit.

Les palettes 41, 42 pourront présenter toute forme adaptée pour remplir leur rôle de déflecteurs des tronçons d'extrémité 5, 6.

Ainsi, de préférence, la première palette 41, dite «palette de crochet » 41, sera agencée pour venir engager le premier tronçon d'extrémité 5, formant un crochet 5, dans le creux du coude 9 dudit crochet 5.

A cet effet, la première 41 palette pourra présenter une lame 47, de préférence plane et sensiblement normale à l'axe central Z3, de sorte à pouvoir s'insérer entre la face inférieure du corps du tore tressé 3A et le crochet 5, et venir en prise dans le creux dudit crochet 5, tel que cela est visible sur la figure 3.

Le chant frontal 48 de ladite lame 47, qui vient au contact du creux du coude 9, pourra présenter, en projection dans un plan normal à l'axe central Z3, un profil incurvé, dont la courbure est de même signe que la ligne génératrice L8 du tore tressé 3, ici donc une courbure concave par rapport à l'axe central Z3.

Une telle courbure permettra avantageusement à la première palette 41 de rester en prise avec le crochet 5 et de conserver ledit crochet 5 en saillie du corps 3A du tore tressé pendant le mouvement de rotation azimutale M30, M30_A du tore tressé 3, bien que ladite première palette 41 reste de préférence fixe pendant ce mouvement du tore tressé.

Le coude 9 du crochet 5 pourra en particulier glisser librement le long du chant frontal 48 incurvé de la lame 47 sans risque de se décrocher de la première palette 41.

De préférence, la seconde palette 42, dite « palette de fil libre » 42, pourra quant à elle comprendre, tel que cela est visible sur les figures 1, 4 et 5, une semelle 43, de préférence sensiblement plane et normale à l'axe central Z3, de sorte à pouvoir s'insérer entre la face supérieure du corps du tore tressé 3A et le fil libre 6.

En fonction du sens d'enroulement choisi pour les spires hélicoïdales 7, le point de rattachement du premier tronçon d'extrémité 5 auxdites spires 7 pourra être situé en partie supérieure du tore tressé 3 tandis que le point de rattachement du second tronçon d'extrémité 6 sera situé en partie inférieure dudit tore tressé 3, comme cela est illustré ici notamment sur les figures 1 et 25, ou bien inversement. L'agencement des palettes 41, 42, et plus globalement de l'unité d'écartement 40, sera bien entendu adapté en conséquence.

La semelle 43 de la seconde palette 42 pourra se poursuivre par une rampe 44 qui, à la manière d'un coin, permettra d'accentuer, au fur et à mesure de la progression de la palette 42 l'écart axial entre le fil libre 6 et le corps 3A du tore tressé, en soulevant progressivement le fil libre 6.

La palette de fil libre 42 pourra en outre comprendre une butée 45, placée dans le prolongement de la rampe 44, par exemple au fond d'une rainure 46, qui peut former de préférence un plateau sensiblement normal à l'axe central Z3, donc ici sensiblement horizontal.

Une fois le fil libre 6 calé en appui contre ladite butée 45, la poursuite de la progression de la second palette 42 transversalement au tore tressé 3 permettra ainsi de faire fléchir le fil libre 6 jusqu'à la position saillante voulue.

Au vu de ce qui précède, on aura compris que, le premier jeu d'organes écarteurs 41, 42, ici les palettes 41, 42, seront de préférence agencés pour tout d'abord écarter les premier et second tronçons d'extrémité 5, 6 du corps du tore tressé 3A, puis pour maintenir lesdits premier et second tronçons d'extrémité 5, 6 en saillie du corps du tore tressé lors du mouvement correspondant au déplacement de recherche M30_A, ici en rotation azimutale, généré par l'unité d'entraînement 30, et ce au moins sur l'amplitude, ici l'amplitude angulaire en lacet, qui est nécessaire à la détection du tronçon d'extrémité 6 par le capteur de tronçon d'extrémité 60.

A ce titre, les palettes 41, 42 seront avantageusement agencées de manière à permettre aux tronçons d'extrémité 5, 6 de glisser sur lesdites palettes 41, sans perdre le contact avec ces dernières, pour accompagner le mouvement M30, M30_A du tore tressé 3.

Selon une possibilité préférentielle de mise en œuvre, l'unité d'écartement 40 comprend, en sus du premier jeu d'organes écarteurs 41, 42 susmentionné, un second jeu d'organes écarteurs 51, 52, de préférence des doigts de retenue 51, 52, qui sont distincts des organes écarteurs 41, 42 du premier jeu, et qui sont montés mobiles par rapport à l'unité d'entraînement 30 de manière à pouvoir engager le premier tronçon d'extrémité 5 et le second tronçon d'extrémité 6 après que lesdits premier tronçon d'extrémité 5 et second tronçon d'extrémité 6 ont été placés en configuration saillante par le premier jeu d'organes écarteurs 41, 42, et de manière à pouvoir ainsi offrir auxdits premier et second tronçons d'extrémité 5, 6 des appuis permettant de maintenir lesdits premier et second tronçons d'extrémité 5, 6 en saillie du corps du tore tressé 3A.

Les organes écarteurs du second jeu 51, 52 pourront de préférence comprendre un premier doigt de retenue 51 destiné à coopérer avec le premier tronçon d'extrémité 5 (crochet) et un second doigt de retenue 52, distinct du premier, destiné à coopérer avec le second tronçon d'extrémité 6 (fil libre).

Par simple commodité de description, on pourra assimiler organes écarteurs du second jeu 51, 52 et doigts de retenue 51, 52 dans ce qui suit.

De préférence, les organes écarteurs 41, 42 du premier jeu, ici les palettes 41, 42, sont escamotables de sorte à pouvoir se dégager automatiquement des premier et second tronçons d'extrémité 5, 6 après que les organes écarteurs 51, 52 du second jeu d'organes écarteurs se sont positionnés entre le corps du tore tressé 3A et les premier et second tronçons d'extrémité 5, 6 et ont engagé lesdits premier et second tronçons d'extrémité 5, 6, tel que cela est visible sur les figures 12, 13, 14 et 15

En d'autres termes, peut avantageusement substituer totalement les doigts de retenue 51, 52 aux palettes 41, 42, et éloigner les palettes 41, 42 de la zone concernée pour libérer ladite zone.

Plus préférentiellement, le second jeu d'organes écarteurs 51, 52 permettra de maintenir lesdits premier et second tronçons d'extrémité 5, 6 en saillie du corps du tore tressé 3A pendant que ledit tore tressé 3 est entraîné en déplacement par l'unité d'entraînement 30 selon une seconde phase M30_B du déplacement M30, distincte de la première phase M30_A de déplacement recherche, et qui correspond à une phase de déplacement d'engagement M30_B, selon laquelle le système de positionnement 20 engage le tore tressé en vis-à-vis d'un outil de coupe 12 (figures 16 et 17) ou d'un outil de jonction 11 (figures 20 ou 21) pour permettre audit outil 11, 12 d'agir sur les premier et second tronçons d'extrémité 5, 6.

Cette seconde phase M30_B du déplacement correspond de préférence à un mouvement de translation, préférentiellement rectiligne, selon une direction transverse à l'axe central Z3. De préférence, cette translation est horizontale.

Avantageusement, durant cette phase de déplacement d'engagement M30_B, les organes écarteurs 51, 52 du second jeu sont entraînés solidairement avec le tore tressé 3, ici en translation dirigée transversalement à l'axe central Z3, de manière à modifier la position du tore tressé et de ses tronçons d'extrémité 5, 6 par rapport à l'outil 11, 12 concerné, et plus particulièrement pour rapprocher lesdits tronçons d'extrémité 5, 6 dudit outil 11, 12.

Avantageusement, l'utilisation de deux jeux d'organes écarteurs 41, 42, 51, 52 qui sont manœuvrables séparément permet de réaliser tout d'abord, au moyen du premier jeu d'organes écarteurs 41, 42, ici les palettes 41, 42, une capture et une mise en saillie « grossière » des tronçons d'extrémité 5, 6 (figures 1, 8, 9), qui est opérationnelle même si le tore tressé 3 est initialement réceptionné au sein du dispositif 1, et plus particulièrement au sein de l'unité d'entraînement 30, dans une position approximative, capture et mise en saillie « grossière » qui est suffisante pour permettre la première phase M30_A de déplacement nécessaire l'opération de détection et de prise de référence par rapport au point de repérage O60 (figure 10), puis de réaliser ensuite un éventuel repositionnement et un maintien en saillie desdits tronçons d'extrémité 5, 6 de manière plus « fine », au moyen du second jeu d'organes écarteurs 51, 52, ici des doigts de retenue 51, 52, moins encombrants que les organes 41, 42 du premier jeu (figures 12 à 15), ce qui permet d'optimiser le placement du point de croisement 13 par rapport au corps du tore tressé 3A, et surtout d'améliorer l'accès aux tronçons d'extrémité 5, 6, à proximité dudit point de croisement 13, pour les opérations de coupe (figures 16 et 17) et/ou de jonction (figures 20 et 21) effectuées par les outils de coupe 12 et de jonction 11 du poste d'assemblage 10.

Les doigts de retenue 51, 52 présenteront de préférence une forme allongée et incurvée, c'est-à-dire non rectiligne dans le sens de la longueur, tel que cela est visible notamment sur la figure 5.

Plus particulièrement, chaque doigt de retenue 51, 52 pourra ainsi présenter une inclinaison ou une courbure concave vers l'intérieur du tore tressé 3, de telle sorte que la pointe libre 51A de chaque doigt de retenue 51, 52, par laquelle le doigt de retenue 51, 52 débute son engagement avec le tronçon d'extrémité 5, 6 correspondant, soit radialement plus proche de l'axe central Z3 que la base 51B dudit doigt de retenue 51 contre laquelle le tronçon d'extrémité 5 est retenu en appui pendant les opérations de détection, puis de coupe et de jonction. On notera que l'agencement du second doigt de retenue 52 est de préférence similaire à l'agencement du premier doigt de retenue 51 visible sur la figure 5.

Les inventeurs ont en effet constaté qu'un agencement concave des doigts de retenue 51, 52, ainsi pliés ou incurvés en direction de l'axe central Z3, limite la tendance du fil de tresse 4, et plus particulièrement des tronçons d'extrémité 5, 6 ainsi retenus, à se dérouler du tore tressé 3. On évite ainsi d'altérer la cohésion provisoire du tore tressé lors des opérations de coupe et de manchonnage, jusqu'à ce que ladite cohésion soit définitivement assurée par la pose du manchon 14.

On notera que la présence, au sein d'une unité d'écartement 40 permettant de placer des tronçons d'extrémité 5, 6 en saillie du corps d'un tore tressé 3A, d'un sous-ensemble comportant deux jeux d'organes écarteurs 41, 42, 51, 52 selon l'un quelconque des agencements décrits ici peut constituer une invention à part entière, indépendamment de la présence ou non d'un capteur de tronçon d'extrémité 60 et/ou d'une unité d'entraînement 30, et par exemple simplement en combinaison avec un poste d'assemblage 10 comprenant un outil de coupe 12 et/ou un outil de jonction 11.

De préférence, les organes écarteurs 41, 42 du premier jeu sont montés mobiles selon au moins une première composante de déplacement X41 (figures 8 et 9) qui est transverse à l'axe central Z3 du tore tressé, de préférence contenue dans un plan normal audit axe central Z3 du tore tressé, tandis que les organes écarteurs du second jeu 51, 52 sont montés mobiles selon au moins une seconde composante de déplacement Z51 (figure 13) qui est parallèle à l'axe central Z3 du tore tressé.

Avantageusement, une telle dissociation des mouvements selon des directions X41, Z51 sécantes, voire perpendiculaires, facilite l'approche différenciée en deux temps, et sans interférence, des palettes 41, 42 d'une part, puis des doigts de retenue 51, 52 d'autre part, ce qui permet notamment d'améliorer la compacité du dispositif 1.

Plus préférentiellement, les palettes 41, 42 pourront être engagées par abord radial centripète, de sorte à traverser latéralement, en projection dans un plan normal à l'axe central Z3, la ligne génératrice L8 depuis l'extérieur du tore tressé 3 jusqu'à l'intérieur du tore tressé 3, tandis que les doigts de retenue 51, 52 pourront ensuite être engagés axialement, ici de bas en haut, de manière à traverser, à l'intérieur du disque délimité par la ligne génératrice L8, le plan médian du tore tressé 3 qui contient ladite ligne génératrice L8 et qui est normal à l'axe central Z3.

Ainsi, plus globalement, les premières et secondes composantes de déplacement X41, Z51 susmentionnées seront avantageusement distinctes de la composante de déplacement M30, M30_A, M30_B mise en œuvre par l'unité d'entraînement 30, et pourront notamment être respectivement transverse (pour X41) et parallèle (pour Z51) à l'axe Z3 de la rotation azimutale M30 qui est mise en œuvre par l'unité d'entraînement 30, notamment pendant la phase de déplacement de recherche M30_A.

Les doigts de retenue 51, 52 viendront de préférence s'insérer entre le corps du tore tressé 3A et les tronçons d'extrémité 5, 6, dans l'espace sensiblement triangulaire dont le corps du tore tressé 3A forme la base, les premier et second tronçons d'extrémité 5, 6 forment les côtés adjacents, et le point de croisement 13 forme le sommet, tel que cela est notamment visible sur les figures 3 et 12.

Ainsi, selon une caractéristique préférentielle qui peut constituer une invention à part entière, les organes écarteurs 41, 42 du premier jeu étant agencés de sorte à placer le premier et le second tronçon d'extrémité 5, 6 en saillie de telle manière que le premier tronçon d'extrémité 5 et le second tronçon d'extrémité 6 se croisent en un point de croisement 13 situé à distance du corps du tore tressé 3A, les organes écarteurs 51, 52 du second jeu sont agencés de manière à venir engager les tronçons d'extrémité 5, 6 à l'intérieur de l'espace compris entre les points d'appui dits « primaires » procurés auxdits tronçons d'extrémité 5, 6 par les organes écarteur 41, 42 du premier jeu, de sorte à offrir auxdits tronçons d'extrémité 5, 6 de nouveaux points d'appui dits « secondaires » qui sont plus proches, le long du fil de tresse 4, du point de croisement 13 que ne l'étaient les points d'appui primaires.

Ainsi, l'engagement des organes écarteurs 51, 52 du second jeu peut avantageusement s'effectuer entre les organes écarteurs du premier jeu 41, 42, ce qui simplifie l'implantation des organes écarteur 41, 42, 51, 52, et permet le cas échéant d'accroître la précision et la reproductibilité avec lesquelles le système de positionnement 20 place le point de croisement 13 par rapport au corps du tore tressé 3A, puis par rapport au poste d'assemblage 10.

De façon particulièrement préférentielle, selon une caractéristique qui peut constituer une invention à part entière, l'unité d'écartement 40 pourra comprendre un mécanisme de déploiement secondaire 53, 54 agencé pour éloigner l'un de l'autre les organes écarteurs 51, 52 du second jeu d'organes écarteurs, après que lesdits organes écarteurs 51, 52 du second jeu ont engagé respectivement le premier tronçon d'extrémité 5 et le second tronçon d'extrémité 6.

Plus particulièrement, le mécanisme de déploiement secondaire 53, 54 permet de préférence d'éloigner chacun des organes écarteurs 51, 52 du second jeu à la fois de l'autre organe écarteur 52, 51 dudit second jeu d'une part et du point de croisement 13 d'autre part.

De préférence, le mécanisme de déploiement secondaire 53, 54 peut comporter un premier bras 53, portant le premier doigt de retenue 51, et un second bras 54 portant le second doigt de retenue 52, lesdits bras 53, 54 étant montés pivotants en lacet, selon des axes de pivotement parallèles, ou sensiblement parallèles, à l'axe central Z3, et pilotés, par l'unité de commande 21, de manière à pouvoir élargir l'ouverture angulaire du secteur angulaire formé par lesdits bras 53, 54 et ainsi augmenter la distance qui sépare l'un de l'autre les doigts de retenue 51, 52, à l'encontre des tronçons d'extrémité 5, 6, tel que cela est illustré sur la figure 14.

Ce déploiement secondaire peut permettre d'accentuer la flexion en saillie des premier et second tronçons d'extrémité 5, 6, et ainsi d'éloigner davantage du corps du tore tressé 3A, sensiblement radialement, le point de croisement 13, en faisant remonter les doigts de retenue 51, 52 le long de leur tronçon d'extrémité 5, 6 respectif vers les spires 7 auxquelles ledit tronçon d'extrémité 5, 6 est rattaché, et ce sans perdre le contact avec ledit tronçon d'extrémité 5, 6.

Surtout, ce déploiement secondaire permet d'élargir l'espace compris entre les deux doigts de retenue 51, 52, et de dégager la zone de travail qui entoure et contient le point de croisement 13, de manière à favoriser l'accès ultérieur aux outils de coupe 12 et/ou de jonction 11 à cette zone de travail.

Ainsi, de façon particulièrement avantageuse, cette capacité de déploiement secondaire permet de réaliser l'insertion initiale des doigts de retenue 51, 52 entre le corps du tore tressé 3A et les tronçons d'extrémité 5, 6 dans un espace relativement étroit, selon une configuration d'insertion rétractée, dans laquelle les doigts de retenue 51, 52 sont proches du point de croisement 13, puis d'amener ensuite lesdits doigts de retenue à leur position fonctionnelle d'écartement, dans une configuration déployée selon laquelle les doigts de retenue 51, 52 se retrouvent à plus grande distance du point de croisement 13, le long de leur tronçon d'extrémité 5, 6 respectif, qu'ils ne l'étaient en configuration rétractée.

Le capteur de tronçon d'extrémité 60 pourra être de toute nature qui soit appropriée à l'application, et plus particulièrement de tout type permettant de générer, lors du passage du tronçon d'extrémité à détecter par le point de repérage O60, un signal de type front montant ou front descendant perceptible par l'unité de commande 21.

Ainsi, on pourrait envisager l'utilisation d'un capteur 60 de type palpeur mécanique agencé de telle manière que le tronçon d'extrémité considéré, ici le fil libre 6, entre en contact avec ledit palpeur lorsque ledit tronçon d'extrémité 6 atteint le point de repérage O60 prédéterminé sur le dispositif 1.

Plus spécifiquement, si le fil de tresse 4 utilisé est conducteur d'électricité et que l'unité d'entraînement comprend des organes conducteurs relié à la terre, on pourrait utiliser un palpeur électriquement conducteur et alimenté sous une tension donnée, de sorte que l'entrée en contact dudit palpeur avec le tronçon d'extrémité 6 provoquerait une chute de tension (par mise à la terre) détectable par l'unité de commande 21.

Cependant, le capteur de tronçon d'extrémité 60 sera de préférence un capteur sans contact, tel que cela est illustré sur les figures 1, 3 et 4.

Un capteur sans contact est notamment moins sensible à l'usure, et n'interfère pas mécaniquement avec le tore tressé 3, ce qui évite notamment de provoquer un relâchement indésirable dudit tore tressé 3 par déroulage de spires 7.

Un tel capteur sans contact pourra éventuellement être du type capacitif ou inductif.

Toutefois, plus préférentiellement, le capteur de tronçon d'extrémité 60 sera un capteur optique, de préférence utilisant une fibre optique, dont le faisceau croise, au point de repérage O60, la trajectoire du tronçon d'extrémité 6 saillant à détecter.

Un tel type de capteur est avantageusement précis spatialement et réactif temporellement.

Si la surface du fil de tresse 4 est réfléchissante, comme cela est notamment le cas lorsque le fil de tresse 4 est en acier zingué, le faisceau pourra être orienté de manière à venir se réfléchir sur la surface du tronçon d'extrémité lorsque ce dernier est présent au point de repérage O60.

En variante, le faisceau pourra être réfléchi par un miroir, situé au-delà du plan de trajectoire du tore tressé, de sorte que le faisceau sera interrompu par le passage du tronçon d'extrémité 6.

Dans ces deux cas, on pourra prévoir, selon un agencement préférentiel particulièrement compact, de placer une cellule de détection au voisinage de la fibre pour recueillir le faisceau réfléchi.

Selon encore une autre variante on pourrait placer l'émetteur du faisceau et la cellule de détection de part et d'autre du plan de trajectoire du tore tressé 3, de sorte à ce que le faisceau soit coupé par le passage du tronçon d'extrémité 6

Ainsi, lorsque le tronçon d'extrémité 6 coupe le faisceau, il est possible de détecter une variation de luminosité (un accroissement de luminosité dans le premier cas où le fil crée une réflexion, une chute dans le second cas où le fil interrompt le faisceau en tout ou partie), et de comparer cette variation de luminosité à un seuil de déclenchement prédéterminé.

De préférence, l'unité d'entraînement 30 étant conçue pour guider le tore tressé 3 en déplacement selon une trajectoire prédéterminée, le système de positionnement 20 comprend une unité de commande 21 qui pilote ladite unité d'entraînement 30 et qui contient une loi de rebroussement permettant d'inverser le sens de déplacement selon lequel l'unité d'entraînement 30 entraîne le tore tressé 3 le long de ladite trajectoire prédéterminée.

Plus particulièrement, la loi de rebroussement permettra d'inverser le sens du mouvement M30_A, ici en rotation azimutale, que l'on effectue en phase de recherche, telle que décrite plus haut, lors d'une prise de référence.

Dans l'exemple préférentiel des figures, on pourra réaliser une première rotation azimutale du tore tressé 3 dans le sens horaire autour de l'axe central Z3, puis rebrousser chemin en réalisant une seconde rotation azimutale du tore tressé 3 dans le sens anti-horaire. En fonction du sens d'enroulement des spires hélicoïdales, on pourra bien entendu inverser l'ordre d'une telle séquence, et réaliser d'abord une rotation anti-horaire, puis une rotation horaire.

La loi de rebroussement peut avantageusement, selon une première possibilité d'application, permettre de réaliser une confirmation de détection, suite à une première détection d'un tronçon d'extrémité 6 qui est survenue au cours d'un premier déplacement effectué dans un premier sens, en faisant effectuer à ce même tronçon d'extrémité 6 un second passage par le point de repérage O60, dans un second sens opposé au premier sens.

En effet, en effectuant un tel aller-retour avec le tore tressé 3, et donc avec le tronçon d'extrémité 6, et en détectant successivement, dans chaque sens de déplacement considéré, le signal (de type front montant) qui correspond au passage dudit tronçon d'extrémité 6 sous le faisceau du capteur 60, on peut d'une part confirmer que la détection ne constitue pas un faux positif, et d'autre part améliorer, par redondance de la mesure, la précision de la prise de référence, en considérant par exemple que la position effective du tronçon d'extrémité 6 est une valeur moyenne des positions détectées dans chacun des deux sens de déplacement.

Selon une seconde possibilité d'application, qui peut être programmée dans l'unité de commande 21 indépendamment ou en complément de la première application ci-dessus, la loi de rebroussement peut être mise en œuvre en cas d'absence de détection d'un tronçon d'extrémité 6 lors d'un premier déplacement effectué dans un premier sens sur une première plage de distance prédéterminée et/ou sur une plage de durée prédéterminée, afin de poursuivre la recherche d'un tronçon d'extrémité 6 dans un second sens opposé au premier sens.

Avantageusement, une telle fonctionnalité permet de détecter le tronçon d'extrémité 6 même lorsque le tore tressé 3 a été mal positionné lors de sa réception au sein du dispositif 1, et plus particulièrement au sein de l'unité d'entraînement 30 et que le tronçon d'extrémité 6 se retrouve donc initialement hors du champ de recherche du système de positionnement 20, considéré par rapport au le premier sens de déplacement.

Typiquement, une telle situation peut se produire si le tore tressé 3 est initialement déposé dans le circuit de guidage de l'unité d'entraînement 30, tel que ledit circuit de guidage est défini par les galets 31, 32 et le cas échéant les tiges de réception 33, avec un décalage azimutal suffisant pour que le fil libre 6 soit dès l'origine situé au-delà de la position de repérage O60 dans le sens horaire.

Avantageusement, en interrompant la première recherche, si celle-ci est infructueuse, pour procéder alors à une seconde recherche dans l'autre sens, ici en rotation anti-horaire, on fait revenir le tronçon d'extrémité 6 dans une configuration qui lui permet de passer finalement sous le capteur 60.

On peut ainsi avantageusement éviter une mise au rebut non fondée du tore tressé 3, qui serait simplement la conséquence d'un mauvais positionnement initial dudit tore tressé 3 dans l'unité d'entraînement 30.

A titre indicatif, l'amplitude maximale de prospection, c'est-à-dire ici la plus grande course azimutale selon laquelle on fera tourner le tore tressé 3, autour de son axe central Z3, dans un sens considéré, à la recherche du tronçon d'extrémité 6, conformément à la phase de déplacement de recherche M30_A, sera de préférence comprise entre 10 degrés et 30 degrés.

Comme indiqué plus haut, le poste d'assemblage 10 peut de préférence comprendre un outil de coupe 12 agencé pour ajuster, par sectionnement du fil de tresse 4 au niveau des premier et second tronçons d'extrémité 5, 6, les longueurs respectives desdits premier et second tronçons d'extrémité 5, 6, ainsi qu'un outil de jonction 11, agencé de manière à pouvoir réunir et fixer l'un à l'autre, suite à leur ajustement en longueur par l'outil de coupe, le premier tronçon d'extrémité 5 et le second tronçon d'extrémité 6.

Avantageusement, le système de positionnement 20 peut alors être agencé pour pouvoir positionner automatiquement, une fois la détection d'un tronçon d'extrémité 5, 6 opérée par le capteur de tronçon d'extrémité 60, le tore tressé 3 par rapport à l'outil de coupe 12 puis par rapport à l'outil de jonction 11.

L'outil de coupe 12 permet avantageusement d'éliminer les excédents de longueur du fil de tresse 4 de part et d'autre du point de croisement 13, en raccourcissant les tronçons d'extrémité 5, 6, de préférence suffisamment pour permettre une jonction non chevauchante entre lesdits tronçons d'extrémité 5, 6.

De préférence, tel que cela est illustré sur la figure 16, l'outil de coupe 12 est agencé pour interrompre chaque tronçon d'extrémité 5, 6 en amont du point de croisement 13 pour permettre une telle jonction sans chevauchement.

On notera que, avantageusement, un même type de mouvement M30, ici en rotation azimutale autour de l'axe central Z3, et plus globalement un même degré de liberté asservi par l'unité de commande 21, peut servir d'une part à détecter le passage du tronçon d'extrémité 6 par le point de repérage O60, et d'autre part à positionner, au moins angulairement, à partir de cette prise de référence, le tore tressé 3, et plus particulièrement le point de croisement 13, en vis-à-vis du poste de coupe 12, respectivement du poste de jonction 11.

Le positionnement du tore tressé 3 vis-à-vis des outils 11, 12 du poste d'assemblage est donc particulièrement précis, stable, et reproductible.

On notera également que le poste d'assemblage 10 pourra être agencé pour assurer une permutation de l'outil de coupe 12 et de l'outil de jonction 11 sur un même emplacement de travail, situé à une seule et même position azimutale donnée autour de l'axe central Z3, ce qui permettra de conserver la même position azimutale du tore tressé 3, et plus particulièrement du point de croisement 13, pour l'ensemble des opérations de coupe puis de jonction, ce qui réduit bien entendu les sources d'erreur de positionnement.

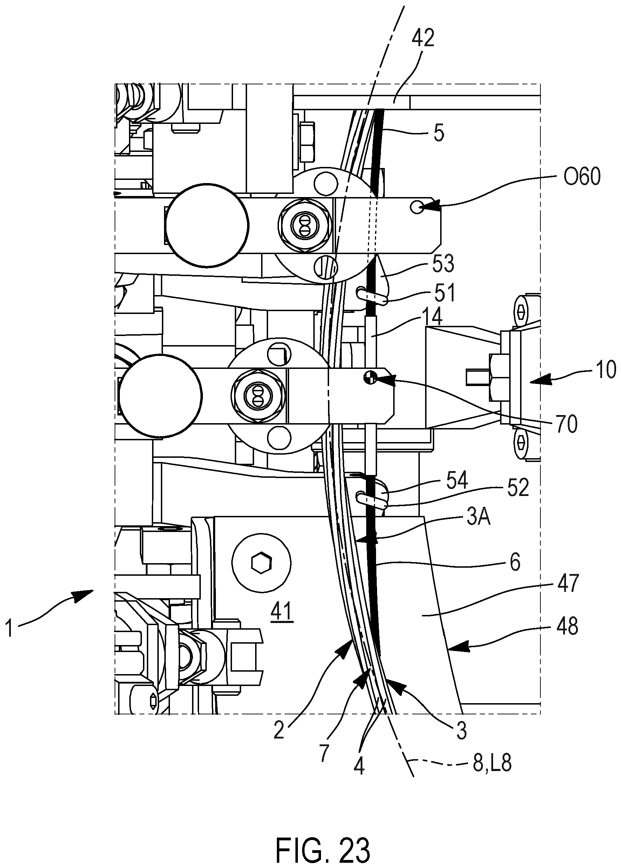

Par ailleurs, selon une caractéristique préférentielle qui peut constituer une invention à part entière, le poste d'assemblage 10 peut être pourvu d'un capteur de manchon 70, agencé pour détecter et vérifier la présence effective du manchon 14 sur le fil de tresse 4 après mise en œuvre de l'opération de jonction par sertissage, tel que cela est illustré sur la figure 23.

La détection du manchon 14 permet de s'assurer de la conformité de la jonction, et donc de la qualité de l'élément annulaire de tringle 2 obtenu.

De préférence, le capteur de manchon 70 sera un capteur sans contact, préférentiellement un capteur optique, et plus préférentiellement un capteur à fibre optique.

Par ailleurs, on pourrait envisager, dans l'absolu, d'utiliser le même capteur pour procéder à la détection du tronçon d'extrémité 6, avant l'opération de coupe et/ou avant l'opération de jonction par manchonnage, puis à la détection du manchon 14.

Toutefois, de préférence, le capteur de manchon 70 est un capteur optique distinct du capteur optique de tronçon d'extrémité 60.

Avantageusement, chaque capteur 60, 70 pourra ainsi disposer de ses propres organes de réglage 61, 71, indépendants des organes de réglage de l'autre capteur, et pourra en particulier faire l'objet d'un réglage mécanique de positionnement différencié, spécifique et précis, tel que cela est visible sur la figure 2.

L'invention concerne par ailleurs en tant que tel un procédé selon l'une ou l'autre des caractéristiques décrites dans ce qui précède.

Plus particulièrement, l'invention concerne un procédé de positionnement, par rapport à un point de repérage O60 choisi, d'un tore tressé 3 formé à partir d'un fil, dit « fil de tresse » 4, qui s'étend longitudinalement depuis un premier tronçon d'extrémité 5 jusqu'à un second tronçon d'extrémité 6 et qui est entrelacé en spires hélicoïdales 7 autour de, et le long de, une ligne génératrice L8 qui forme un anneau autour d'un axe principal Z3 qui correspond à l'axe central dudit tore tressé 3, ledit procédé comprenant une étape (a) de mise en saillie au cours de laquelle on fait saillir, par déformation élastique, les premier et second tronçons d'extrémité 5, 6 par rapport au reste 3A du tore tressé (figures 4, 8 et 9), une étape (b) de mise en mouvement au cours de laquelle on entraîne en déplacement le tore tressé 3, pourvu de ses premier et second tronçons d'extrémité 5, 6 maintenus saillants, selon une trajectoire choisie, et une étape (c) de surveillance au cours de laquelle on détecte le passage de l'un au moins desdits premier et second tronçons d'extrémité 5, 6 saillants par le point de repérage O60 choisi (figures 3 et 10).

Plus globalement, l'invention concerne un procédé fabrication tringle pour bandage pneumatique, qui inclut de préférence une étape (d) de coupe (figures 16 et 17), puis une étape (e) de jonction (figures 20 à 22), de préférence par manchonnage, telles que décrites plus haut.

Ledit procédé comprend en outre de préférence une étape (f) de vérification de la présence du manchon (figure 23).

Ledit procédé comprend enfin, notamment après l'étape (f) de vérification de la présence de manchon, une étape (g) d'évacuation de l'élément annulaire de tringle 2, au cours de laquelle on libère l'élément annulaire de tringle 2 obtenu, puis on le remplace, au sein du dispositif, par un nouveau tore tressé 3.

Bien entendu, l'étape (a) de mise en saillie pourra comprendre deux sous-étapes d'écartement, au cours desquelles on met en œuvre successivement, et respectivement, les palettes 41, 42 susmentionnées (figures 8 et 9) puis les doigts de retenue 51, 52 (figures 12 à 15) tels que décrits plus haut.

Bien entendu, l'invention n'est nullement limitée aux seules variantes de réalisation décrites dans ce qui précède, l'homme du métier étant notamment à même d'isoler ou de combiner librement entre elles l'une ou l'autre des caractéristiques susmentionnées, ou de leur substituer des équivalents.

En particulier, l'invention peut porter, indépendamment de la présence ou non d'un capteur de tronçon d'extrémité 60, sur une unité d'écartement 40 qui comprend un premier jeu d'organes écarteur 41, 42 et un second jeu d'organes écarteurs 51, 52 tels que décrits plus haut, et qui est associée à un outil de coupe 12 et/ou un outil de jonction 11 tels que décrits plus haut, et ce notamment pour positionner et maintenir le point de croisement 13 des premier et second tronçons d'extrémité 5, 6 dans une plage de distance prédéterminée par rapport à surface (ici radialement interne) du tore tressé 3 pendant l'opération de coupe et/ou pendant l'opération de manchonnage.

## Revendications

1. Dispositif (1) de fabrication d'un élément annulaire de tringle (2) destiné à renforcer un bandage, notamment un bandage pneumatique, ledit dispositif (1) comprenant un poste d'assemblage (10) qui est agencé d'une part pour recevoir un tore tressé (3) comprenant au moins un fil, dit « fil de tresse » (4), qui s'étend longitudinalement depuis un premier tronçon d'extrémité (5) jusqu'à un second tronçon d'extrémité (6) et qui est entrelacé en spires hélicoïdales (7) autour de, et le long de, une ligne génératrice (L8) qui forme un anneau autour d'un axe principal qui correspond à l'axe central (Z3) dudit tore tressé (3), et d'autre part pour réunir et fixer l'un à l'autre le premier tronçon d'extrémité (5) et le second tronçon d'extrémité (6) de sorte à assurer la cohésion du tore tressé (3) en un élément annulaire de tringle (2), ledit dispositif étant **caractérisé en ce qu'**il comporte un système de positionnement (20) qui permet d'ajuster automatiquement la position du tore tressé par rapport au poste d'assemblage et qui comprend à cet effet :
- une unité d'entraînement (30) qui est agencée pour entraîner en déplacement le tore tressé (3) par rapport au poste d'assemblage (10),
- une unité d'écartement (40) qui est agencée pour faire saillir, par déformation élastique, les premier et second tronçons d'extrémité (5, 6) par rapport au reste du tore tressé, dit « corps du tore tressé » (3A), et pour maintenir lesdits premier et second tronçons d'extrémité (5, 6) en saillie du corps du tore tressé (3A) pendant que ledit tore tressé (3) est entraîné en déplacement (M30) par l'unité d'entraînement (30),
- un capteur de tronçon d'extrémité (60) qui est placé de manière à pouvoir détecter la présence ou le passage du tronçon d'extrémité (5, 6) saillant concerné en un point de repérage (O60) qui est défini par ledit capteur de tronçon d'extrémité (60) et qui constitue une référence connue par rapport au poste d'assemblage (10).

2. Dispositif selon la revendication 1 **caractérisé en ce que** l'unité d'écartement comprend d'une part un premier jeu d'organes écarteurs (41, 42), de préférence des palettes (41, 42), qui sont montés mobiles par rapport à l'unité d'entraînement (30) de sorte à pouvoir capturer le premier tronçon d'extrémité (5) et le second tronçon d'extrémité (6) et déplacer par flexion élastique lesdits premier et second tronçons d'extrémité (5, 6) par rapport au corps du tore tressé (3A) pour amener lesdits premier et second tronçons d'extrémité (5, 6) dans une configuration saillante par rapport audit corps du tore tressé (3A), et **en ce que** les organes écarteurs (41, 42) du premier jeu sont également agencés pour maintenir les premier et second tronçons d'extrémité (5, 6) durant au moins une première phase (M30 A) du déplacement (M30), qui correspond à une phase de déplacement de recherche (M30 A) au cours de laquelle le système de positionnement (20) déplace le tore tressé (3) de manière à faire passer par le point de repérage (O60) un tronçon d'extrémité (6) saillant, pour pouvoir réaliser une prise de référence.

3. Dispositif selon la revendication 2 **caractérisé en ce que** l'unité d'écartement (40) comprend, en sus des organes écarteurs (41, 42) du premier jeu, un second jeu d'organes écarteurs (51, 52), de préférence des doigts de retenue (51, 52), qui sont distincts des organes écarteurs (41, 42) du premier jeu, et qui sont montés mobiles par rapport à l'unité d'entraînement (30) de manière à pouvoir engager le premier tronçon d'extrémité (5) et le second tronçon d'extrémité (6) après que lesdits premier tronçon d'extrémité (5) et second tronçon d'extrémité (6) ont été placés en configuration saillante par le premier jeu d'organes écarteurs (41, 42), de manière à pouvoir ainsi offrir auxdits premier et second tronçons d'extrémité (5, 6) des appuis permettant de maintenir lesdits premier et second tronçons d'extrémité (5, 6) en saillie du corps du tore tressé (3A), **en ce que** les organes écarteurs (41, 42) du premier jeu sont escamotables de sorte à pouvoir se dégager automatiquement des premier et second tronçons d'extrémité (5, 6) après que les organes écarteurs (51, 52) du second jeu d'organes écarteurs se sont positionnés entre le corps du tore tressé (3A) et les premier et second tronçons d'extrémité (5, 6) et ont engagé lesdits premier et second tronçons d'extrémité (5, 6), et **en ce que** le second jeu d'organes écarteurs (51, 52) permet de maintenir lesdits premier et second tronçons d'extrémité (5, 6) en saillie du corps du tore tressé (3A) pendant que ledit tore tressé (3) est entraîné en déplacement par l'unité d'entraînement (30) selon une seconde phase (M30_B) du déplacement (M30), distincte de la première phase de déplacement (M30_A) de recherche, et qui correspond à une phase de déplacement d'engagement (M30_B), selon laquelle le système de positionnement (20) engage le tore tressé en vis-à-vis d'un outil de coupe (12) ou d'un outil de jonction (11) pour permettre audit outil (11, 12) d'agir sur les premier et second tronçons d'extrémité (5, 6).

4. Dispositif selon la revendication 2 ou 3 **caractérisé en ce que** les organes écarteurs (41, 42) du premier jeu sont montés mobiles selon au moins une première composante de déplacement (X41) qui est transverse à l'axe central (Z3) du tore tressé, de préférence contenue dans un plan normal audit axe central (Z3) du tore tressé, tandis que les organes écarteurs (51, 52) du second jeu sont montés mobiles selon au moins une seconde composante de déplacement (Z51) qui est parallèle à l'axe central (Z3) du tore tressé.

5. Dispositif selon l'une des revendications 3 ou 4 **caractérisé en ce que**, les organes écarteurs (41, 42) du premier jeu étant agencés de sorte à placer le premier et le second tronçon d'extrémité (5, 6) en saillie de telle manière que le premier tronçon d'extrémité (5) et le second tronçon d'extrémité (6) se croisent en un point de croisement (13) situé à distance du corps du tore tressé (3A), les organes écarteurs (51, 52) du second jeu sont agencés de manière à venir engager les tronçons d'extrémité (5, 6) à l'intérieur de l'espace compris entre les points d'appui dits « primaires » procurés auxdits tronçons d'extrémité (5, 6) par les organes écarteur (41, 42) du premier jeu, de sorte à offrir auxdits tronçons d'extrémité (5, 6) de nouveaux points d'appui dits « secondaires » qui sont plus proches, le long du fil de tresse (4), du point de croisement (13) que ne l'étaient les points d'appui primaires, et **en ce que** l'unité d'écartement (40) comprend un mécanisme de déploiement secondaire (53, 54) agencé pour éloigner l'un de l'autre les organes écarteurs (51, 52) du second jeu d'organes écarteurs, après que lesdits organes écarteurs (51, 52) du second jeu ont engagé respectivement le premier tronçon d'extrémité (5) et le second tronçon d'extrémité (6).

6. Dispositif selon l'une des revendications précédentes **caractérisé en ce que** le capteur de tronçon d'extrémité (60) est un capteur sans contact.

7. Dispositif selon l'une des revendications précédentes **caractérisé en ce que** le capteur de tronçon d'extrémité (60) est un capteur optique, de préférence utilisant une fibre optique, dont le faisceau croise, au point de repérage (O60), la trajectoire du tronçon d'extrémité (6) saillant à détecter.

8. Dispositif selon l'une des revendications précédentes **caractérisé en ce que** l'unité d'entraînement (30) est agencée pour entraîner le tore tressé (3) en rotation azimutale autour de l'axe central (Z3) dudit tore tressé.

9. Dispositif selon l'une des revendications précédentes **caractérisé en ce que**, l'unité d'entraînement (30) étant conçue pour guider le tore tressé (3) en déplacement selon une trajectoire prédéterminée, le système de positionnement (20) comprend une unité de commande (21) qui pilote ladite unité d'entraînement (30) et qui contient une loi de rebroussement permettant d'inverser le sens de déplacement selon lequel l'unité d'entraînement (30) entraîne le tore tressé (3) le long de ladite trajectoire prédéterminée, et ce soit afin de réaliser une confirmation de détection, suite à une première détection d'un tronçon d'extrémité (6) qui est survenue au cours d'un premier déplacement effectué dans un premier sens, en faisant effectuer à ce même tronçon d'extrémité (6) un second passage par le point de repérage (O60), dans un second sens opposé au premier sens, soit, en cas d'absence de détection d'un tronçon d'extrémité (6) lors d'un premier déplacement effectué dans un premier sens sur une première plage de distance prédéterminée et/ou sur une plage de durée prédéterminée, afin de poursuivre la recherche d'un tronçon d'extrémité (6) dans un second sens opposé au premier sens.

10. Dispositif selon l'une des revendications précédentes **caractérisé en ce que** le poste d'assemblage (10) comprend un outil de coupe (12) agencé pour ajuster, par sectionnement du fil de tresse (4) au niveau des premier et second tronçons d'extrémité (5, 6), les longueurs respectives desdits premier et second tronçons d'extrémité (5, 6), ainsi qu'un outil de jonction (11), agencé de manière à pouvoir réunir et fixer l'un à l'autre, suite à leur ajustement en longueur par l'outil de coupe (12), le premier tronçon d'extrémité (5) et le second tronçon d'extrémité (6), et **en ce que** le système de positionnement (20) est agencé pour pouvoir positionner automatiquement, une fois la détection d'un tronçon d'extrémité (6) opérée par le capteur de tronçon d'extrémité (60), le tore tressé (3) par rapport à l'outil de coupe (12) puis par rapport à l'outil de jonction (11).

11. Dispositif selon l'une des revendications précédentes **caractérisé en ce que** le poste d'assemblage (10) comprend un outil (11) de jonction par sertissage qui réalise la jonction entre le premier tronçon d'extrémité (5) et le second tronçon d'extrémité (6) en sertissant sur le fil de tresse (4) un manchon (14) qui réunit et fixe l'un à l'autre lesdits premier et second tronçons d'extrémité (5, 6).

12. Dispositif selon la revendication 11 **caractérisé en ce que** le poste d'assemblage (10) est pourvu d'un capteur de manchon (70), agencé pour détecter et vérifier la présence effective du manchon (14) sur le fil de tresse (4) après mise en œuvre de l'opération de sertissage.

13. Dispositif selon les revendications 12 et 7 **caractérisé en ce que** le capteur de manchon (70) est un capteur optique distinct du capteur optique de tronçon d'extrémité (60).

14. Procédé de positionnement, par rapport à un point de repérage (O60) choisi, d'un tore tressé (3) formé à partir d'un fil, dit « fil de tresse » (4), qui s'étend longitudinalement depuis un premier tronçon d'extrémité (5) jusqu'à un second tronçon d'extrémité (6) et qui est entrelacé en spires hélicoïdales (7) autour de, et le long de, une ligne génératrice (L8) qui forme un anneau autour d'un axe principal qui correspond à l'axe central (Z3) dudit tore tressé, ledit procédé comprenant une étape (a) de mise en saillie au cours de laquelle on fait saillir, par déformation élastique, les premier et second tronçons d'extrémité (5, 6) par rapport au reste (3A) du tore tressé, une étape (b) de mise en mouvement au cours de laquelle on entraîne en déplacement le tore tressé (3), pourvu de ses premier et second tronçons d'extrémité (5, 6) saillants, selon une trajectoire choisie, et une étape (c) de surveillance au cours de laquelle on détecte le passage de l'un au moins desdits premier et second tronçons d'extrémité (5, 6) par le point de repérage (O60) choisi.

## Patentansprüche

1. Vorrichtung (1) zur Herstellung eines ringförmigen Wulstkernelements (2), das dazu bestimmt ist, einen Reifen, insbesondere einen Luftreifen, zu verstärken, wobei die Vorrichtung (1) eine Montagestation (10) umfasst, welche einerseits dazu eingerichtet ist, einen geflochtenen Torus (3) aufzunehmen, der wenigstens einen Draht, "Flechtdraht" (4) genannt, umfasst, welcher sich in Längsrichtung von einem ersten Endabschnitt (5) bis zu einem zweiten Endabschnitt (6) erstreckt und welcher in schraubenförmigen Windungen (7) um eine Erzeugende (L8) und entlang dieser geflochten ist, welche einen Ring um eine Hauptachse bildet, welche der Mittelachse (Z3) des geflochtenen Torus (3) entspricht, und andererseits dazu, den ersten Endabschnitt (5) und den zweiten Endabschnitt (6) zu vereinigen und aneinander zu befestigen, um so den Zusammenhalt des geflochtenen Torus (3) in einem ringförmigen Wulstkernelement (2) sicherzustellen, wobei die Vorrichtung **dadurch gekennzeichnet ist, dass** sie ein Positioniersystem (20) aufweist, welches ermöglicht, die Position des geflochtenen Torus in Bezug auf die Montagestation automatisch einzustellen, und welches zu diesem Zweck umfasst:
- eine Antriebseinheit (30), welche dazu eingerichtet ist, den geflochtenen Torus (3) in Bezug auf die Montagestation (10) verschiebend anzutreiben,
- eine Abspreizungseinheit (40), welche dazu eingerichtet ist, den ersten und den zweiten Endabschnitt (5, 6) durch elastische Verformung in Bezug auf den Rest des geflochtenen Torus, "Körper des geflochtenen Torus" (3A) genannt, vorstehen zu lassen und den ersten und den zweiten Endabschnitt (5, 6) in einer vom Körper des geflochtenen Torus (3A) vorstehenden Position zu halten, während der geflochtene Torus (3) von der Antriebseinheit (30) verschiebend (M30) angetrieben wird,
- einen Endabschnittssensor (60), welcher so angeordnet ist, dass er das Vorhandensein oder den Durchgang des betreffenden vorstehenden Endabschnitts (5, 6) an einem Ortungspunkt (O60) erkennen kann, welcher durch den Endabschnittssensor (60) definiert ist und welcher einen bekannten Bezugspunkt in Bezug auf die Montagestation (10) darstellt.

2. Vorrichtung nach Anspruch 1, **dadurch gekennzeichnet, dass** die Abspreizungseinheit einerseits einen ersten Satz von Abspreizorganen (41, 42), vorzugsweise von Schaufeln (41, 42), umfasst, welche in Bezug auf die Antriebseinheit (30) bewegbar angebracht sind, derart, dass sie den ersten Endabschnitt (5) und den zweiten Endabschnitt (6) erfassen können und den ersten und den zweiten Endabschnitt (5, 6) durch elastisches Biegen in Bezug auf den Körper des geflochtenen Torus (3A) verschieben können, um den ersten und den zweiten Endabschnitt (5, 6) in eine in Bezug auf den Körper des geflochtenen Torus (3A) vorstehende Konfiguration zu bringen, und dadurch, dass die Abspreizorgane (41, 42) des ersten Satzes außerdem dazu eingerichtet sind, den ersten und den zweiten Endabschnitt (5, 6) während wenigstens einer ersten Phase (M30_A) der Verschiebung (M30) zu halten, welche einer Suchphase der Verschiebung (M30 A) entspricht, in deren Verlauf das Positioniersystem (20) den geflochtenen Torus (3) verschiebt, um einen vorstehenden Endabschnitt (6) den Ortungspunkt (O60) passieren zu lassen, um eine Referenzierung durchführen zu können.

3. Vorrichtung nach Anspruch 2, **dadurch gekennzeichnet, dass** die Abspreizungseinheit (40), zusätzlich zu den Abspreizorganen (41, 42) des ersten Satzes, einen zweiten Satz von Abspreizorganen (51, 52), vorzugsweise von Haltefingern (51, 52), umfasst, welche von den Abspreizorganen (41, 42) des ersten Satzes verschieden sind und welche in Bezug auf die Antriebseinheit (30) bewegbar angebracht sind, so dass sie am ersten Endabschnitt (5) und am zweiten Endabschnitt (6) angreifen können, nachdem der erste Endabschnitt (5) und der zweite Endabschnitt (6) durch den ersten Satz von Abspreizorganen (41, 42) in eine vorstehende Konfiguration gebracht worden sind, um so für den ersten und den zweiten Endabschnitt (5, 6) Stützen bilden zu können, die es ermöglichen, den ersten und den zweiten Endabschnitt (5, 6) vom Körper des geflochtenen Torus (3A) vorstehend zu halten, dadurch, dass die Abspreizorgane (41, 42) des ersten Satzes einklappbar sind, derart, dass sie sich automatisch vom ersten und zweiten Endabschnitt (5, 6) lösen können, nachdem die Abspreizorgane (51, 52) des zweiten Satzes von Abspreizorganen Positionen zwischen dem Körper des geflochtenen Torus (3A) und dem ersten und zweiten Endabschnitt (5, 6) eingenommen haben und am ersten und zweiten Endabschnitt (5, 6) angegriffen haben, und dadurch, dass der zweite Satz von Abspreizorganen (51, 52) ermöglicht, den ersten und den zweiten Endabschnitt (5, 6) vom Körper des geflochtenen Torus (3A) vorstehend zu halten, während der geflochtene Torus (3) von der Antriebseinheit (30) gemäß einer zweiten Phase (M30 B) der Verschiebung (M30) verschiebend angetrieben wird, die von der ersten Suchphase der Verschiebung (M30 A) verschieden ist und die einer Eingriffsphase der Verschiebung (M30 B) entspricht, gemäß welche das Positioniersystem (20) an dem geflochtene Torus gegenüber einem Schneidwerkzeug (12) oder einem Verbindungswerkzeug (11) angreift, um diesem Werkzeug (11, 12) zu ermöglichen, auf den ersten und den zweiten Endabschnitt (5, 6) einzuwirken.

4. Vorrichtung nach Anspruch 2 oder 3, **dadurch gekennzeichnet, dass** die Abspreizorgane (41, 42) des ersten Satzes entlang wenigstens einer ersten Verschiebungskomponente (X41) bewegbar angebracht sind, welche quer zur Mittelachse (Z3) des geflochtenen Torus verläuft und vorzugsweise in einer zur Mittelachse (Z3) des geflochtenen Torus senkrechten Ebene verläuft, während die Abspreizorgane (51, 52) des zweiten Satzes entlang wenigstens einer zweiten Verschiebungskomponente (Z51) bewegbar angebracht sind, welche parallel zur Mittelachse (Z3) des geflochtenen Torus ist.

5. Vorrichtung nach einem der Ansprüche 3 oder 4, **dadurch gekennzeichnet, dass**, wenn die Abspreizorgane (41, 42) des ersten Satzes so eingerichtet sind, dass sie den ersten und den zweiten Endabschnitt (5, 6) derart vorstehend anordnen, dass sich der erste Endabschnitt (5) und der zweite Endabschnitt (6) in einem Kreuzungspunkt (13) überkreuzen, der sich in einem Abstand vom Körper des geflochtenen Torus (3A) befindet, die Abspreizorgane (51, 52) des zweiten Satzes so eingerichtet sind, dass sie an den Endabschnitten (5, 6) im Inneren des Raumes angreifen, der zwischen den sogenannten "primären" Abstützpunkten liegt, die den Endabschnitten (5, 6) durch die Abspreizorgane (41, 42) des ersten Satzes verschafft werden, derart, dass sie den Endabschnitten (5, 6) neue, sogenannte "sekundäre" Abstützpunkte bieten, welche dem Kreuzungspunkt (13) entlang des Flechtdrahtes (4) näher sind, als es die primären Abstützpunkte waren, und dadurch, dass die Abspreizungseinheit (40) einen sekundären Ausbreitungsmechanismus (53, 54) umfasst, der dazu eingerichtet ist, die Abspreizorgane (51, 52) des zweiten Satzes von Abspreizorganen voneinander zu entfernen, nachdem die Abspreizorgane (51, 52) des zweiten Satzes am ersten Endabschnitt (5) bzw. am zweiten Endabschnitt (6) angegriffen haben.

6. Vorrichtung nach einem der vorhergehenden Ansprüche, **dadurch gekennzeichnet, dass** der Endabschnittssensor (60) ein kontaktloser Sensor ist.

7. Vorrichtung nach einem der vorhergehenden Ansprüche, **dadurch gekennzeichnet, dass** der Endabschnittssensor (60) ein optischer Sensor ist, der vorzugsweise einen Lichtwellenleiter verwendet, dessen Bündel am Ortungspunkt (O60) die Trajektorie des vorstehenden Endabschnitts (6) kreuzt, der erkannt werden soll.

8. Vorrichtung nach einem der vorhergehenden Ansprüche, **dadurch gekennzeichnet, dass** die Antriebseinheit (30) dazu eingerichtet ist, den geflochtenen Torus (3) zu einer azimutalen Drehung um die Mittelachse (Z3) des geflochtenen Torus anzutreiben.

9. Vorrichtung nach einem der vorhergehenden Ansprüche, **dadurch gekennzeichnet, dass**, wenn die Antriebseinheit (30) dafür ausgebildet ist, den geflochtenen Torus (3) bei einer Verschiebung entlang einer vorbestimmten Trajektorie zu führen, das Positioniersystem (20) eine Steuereinheit (21) umfasst, welche die Antriebseinheit (30) steuert und welche eine Regel für die Richtungsumkehr enthält, die es ermöglicht, die Verschiebungsrichtung, in welcher die Antriebseinheit (30) den geflochtenen Torus (3) entlang der vorbestimmten Trajektorie antreibt, umzukehren, und zwar entweder, um im Anschluss an eine erste Erkennung eines Endabschnitts (6), welche im Verlaufe einer in einer ersten Richtung durchgeführten ersten Verschiebung erfolgt ist, eine Bestätigung der Erkennung vorzunehmen, indem bewirkt wird, dass dieser gleiche Endabschnitt (6) einen zweiten Durchgang durch den Ortungspunkt (O60) in einer zur ersten Richtung entgegengesetzten zweiten Richtung ausführt, oder um im Fall des Ausbleibens einer Erkennung eines Endabschnitts (6) bei einer in einer ersten Richtung durchgeführten ersten Verschiebung in einem ersten vorbestimmten Entfernungsbereich und/oder in einem Bereich von vorbestimmter Dauer die Suche nach einem Endabschnitt (6) in einer zur ersten Richtung entgegengesetzten zweiten Richtung fortzusetzen.

10. Vorrichtung nach einem der vorhergehenden Ansprüche, **dadurch gekennzeichnet, dass** die Montagestation (10) ein Schneidwerkzeug (12) umfasst, das dazu eingerichtet ist, durch Trennen des Flechtdrahtes (4) am ersten und am zweiten Endabschnitt (5, 6) die jeweiligen Längen des ersten und zweiten Endabschnitts (5, 6) einzustellen, sowie ein Verbindungswerkzeug (11), das derart eingerichtet ist, dass es den ersten Endabschnitt (5) und den zweiten Endabschnitt (6) im Anschluss an ihre Längeneinstellung durch das Schneidwerkzeug (12) vereinigen und aneinander befestigen kann, und dadurch, dass das Positioniersystem (20) dazu eingerichtet ist, nachdem die Erkennung eines Endabschnitts (6) durch den Endabschnittssensor (60) erfolgt ist, den geflochtenen Torus (3) in Bezug auf das Schneidwerkzeug (12) und danach in Bezug auf das Verbindungswerkzeug (11) automatisch positionieren zu können.

11. Vorrichtung nach einem der vorhergehenden Ansprüche, **dadurch gekennzeichnet, dass** die Montagestation (10) ein Werkzeug (11) zur Verbindung durch Crimpen umfasst, welches die Verbindung zwischen dem ersten Endabschnitt (5) und dem zweiten Endabschnitt (6) herstellt, indem es auf den Flechtdraht (4) eine Hülse (14) crimpt, welche den ersten und den zweiten Endabschnitt (5, 6) vereinigt und aneinander befestigt.

12. Vorrichtung nach Anspruch 11, **dadurch gekennzeichnet, dass** die Montagestation (10) mit einem Hülsensensor (70) versehen ist, der dazu eingerichtet ist, das tatsächliche Vorhandensein der Hülse (14) auf dem Flechtdraht (4) nach Durchführung des Crimpvorgangs zu erkennen und zu überprüfen.

13. Vorrichtung nach den Ansprüchen 12 und 7, **dadurch gekennzeichnet, dass** der Hülsensensor (70) ein optischer Sensor ist, der von dem optischen Endabschnittssensor (60) verschieden ist.

14. Verfahren zur Positionierung, in Bezug auf einen gewählten Ortungspunkt (O60), eines geflochtenen Torus (3), der aus einem Draht, "Flechtdraht" (4) genannt, gebildet wurde, welcher sich in Längsrichtung von einem ersten Endabschnitt (5) bis zu einem zweiten Endabschnitt (6) erstreckt und welcher in schraubenförmigen Windungen (7) um eine Erzeugende (L8) und entlang dieser geflochten ist, welche einen Ring um eine Hauptachse bildet, welche der Mittelachse (Z3) des geflochtenen Torus entspricht, wobei das Verfahren einen Schritt (a) des Vorstehenlassens umfasst, in welchem der erste und der zweite Endabschnitt (5, 6) durch elastische Verformung in Bezug auf den Rest (3A) des geflochtenen Torus vorstehen gelassen werden, einen Schritt (b) des Versetzens in Bewegung, in welchem der mit seinem ersten und zweiten vorstehenden Endabschnitt (5, 6) versehene geflochtene Torus (3) entlang einer gewählten Trajektorie verschiebend angetrieben wird, und einen Schritt (c) der Überwachung, in welchem der Durchgang wenigstens eines des ersten und des zweiten Endabschnitts (5, 6) durch den gewählten Ortungspunkt (O60) erkannt wird.

## Claims

1. Device (1) for producing an annular bead core element (2) designed to reinforce a tyre, notably a pneumatic tyre, said device (1) comprising an assembly station (10) that is arranged on the one hand to receive a braided torus (3) comprising at least one wire, referred to as the "braid wire" (4), that extends longitudinally from a first end section (5) to a second end section (6) and that is interwoven in helical coils (7) about and along a generatrix line (L8) that forms a ring about a main axis that is the central axis (Z3) of said braided torus (3), and on the other hand to join and fasten the first end section (5) to the second end section (6) so that the braided torus (3) forms a cohesive annular bead core element (2), said device being **characterized in that** it includes a positioning system (20) for automatically adjusting the position of the braided torus in relation to the assembly station, and that includes for this purpose:
- a drive unit (30) that is arranged to move the braided torus (3) in relation to the assembly station (10),
- a spacer unit (40) that is arranged to cause the first and second end sections (5, 6) to project from the rest of the braided torus, referred to as the "body of the braided torus" (3A), by elastic deformation, and to hold said first and second end sections (5, 6) in projection from the body of the braided torus (3A) while said braided torus (3) is being moved (M30) by the drive unit (30),
- an end-section sensor (60) that is arranged to detect the presence or passing of the projecting end section (5, 6) in question at a tracking point (O60), which is defined by said end-section sensor (60) and which provides a known reference in relation to the assembly station (10).

2. Device according to Claim 1, **characterized in that** the spacer unit has firstly a first set of spacer members (41, 42), preferably vanes (41, 42), that are mounted moveably in relation to the drive unit (30) such as to catch the first end section (5) and the second end section (6) and to move said first and second end sections (5, 6), by elastic flexion of said first and second end sections (5, 6) in relation to the body of the braided torus (3A), into a projecting state in relation to said body of the braided torus (3A), and **in that** the spacer members (41, 42) of the first set are also arranged to hold the first and second end sections (5, 6) at least throughout a first phase (M30_A) of the movement (M30), which is a search movement phase (M30_A) during which the positioning system (20) moves the braided torus (3) to cause a projecting end section (6) to pass the tracking point (O60) in order to set a datum point.

3. Device according to Claim 2, **characterized in that** the spacer unit (40) has, in addition to the spacer members (41, 42) of the first set, a second set of spacer members (51, 52), preferably retaining fingers (51, 52), which are distinct from the spacer members (41, 42) of the first set and which are mounted moveably in relation to the drive unit (30) such as to engage the first end section (5) and the second end section (6) once said first end section (5) and said second end section (6) have been placed in the projecting state by the first set of spacer members (41, 42), thereby providing said first and second end sections (5, 6) with supports enabling said first and second end sections (5, 6) to be held in projection from the body of the braided torus (3A), **in that** the spacer members (41, 42) of the first set are retractable to be able to automatically disengage from the first and second end sections (5, 6) once the spacer members (51, 52) of the second set of spacer members have been positioned between the body of the braided torus (3A) and the first and second end sections (5, 6) and have engaged said first and second end sections (5, 6), and **in that** the second set of spacer members (51, 52) holds said first and second end sections (5, 6) in projection from the body of the braided torus (3A) while said braided torus (3) is moved by the drive unit (30) in a second phase (M30 B) of the movement (M30) that is distinct from the first search movement phase (M30_A) and that is an engagement movement phase (M30_B), in which the positioning system (20) engages the braided torus in front of a cutting tool (12) or a joining tool (11) to enable said tool (11, 12) to act on the first and second end sections (5, 6).

4. Device according to Claim 2 or 3, **characterized in that** the spacer members (41, 42) of the first set are mounted movably along at least one first movement component (X41) that is transverse to the central axis (Z3) of the braided torus, preferably contained in a plane normal to said central axis (Z3) of the braided torus, while the spacer members (51, 52) of the second set are mounted movably according to a second movement component (Z51) that is parallel to the central axis (Z3) of the braided torus.

5. Device according to one of Claims 3 or 4, **characterized in that**, with the spacer members (41, 42) of the first set being arranged such as to cause the first and second end sections (5, 6) to project such that the first end section (5) and the second end section (6) cross one another at a crossing point (13) situated away from the body of the braided torus (3A), the spacer members (51, 52) of the second set are arranged such as to engage the end sections (5, 6) inside the space between the so-called "primary" bearing points obtained for said end sections (5, 6) by the spacer members (41, 42) of the first set, such as to provide said end sections (5, 6) with new so-called "secondary" bearing points that are closer, along the braid wire (4), to the crossing point (13) than the primary bearing points, and **in that** the spacer unit (40) includes a secondary deployment mechanism (53, 54) that is arranged to move the spacer members (51, 52) of the second set of spacer members away from one another, once said spacer members (51, 52) of the second set have engaged the first end section (5) and the second end section (6) respectively.

6. Device according to one of the preceding claims, **characterized in that** the end-section sensor (60) is a contactless sensor.

7. Device according to one of the preceding claims, **characterized in that** the end-section sensor (60) is an optical sensor, preferably using an optical fibre, the beam from which crosses, at the tracking point (O60), the path of the projecting end section (6) to be detected.

8. Device according to one of the preceding claims, **characterized in that** the drive unit (30) is arranged to drive the braided torus (3) in azimuth rotation about the central axis (Z3) of said braided torus.

9. Device according to one of the preceding claims, **characterized in that**, with the drive unit (30) being designed to guide the braided torus (3) along a predetermined path, the positioning system (20) includes a control unit (21) that controls said drive unit (30) and that includes a reversal rule for inverting the direction of movement in which the drive unit (30) drives the braided torus (3) along said predetermined path, either to confirm detection, following a first detection of an end section (6) occurring during a first movement in a first direction, by causing said same end section (6) to effect a second pass of the tracking point (O60) in a second direction opposite the first direction, or, if no end section (6) is detected during a first movement in a first direction within a first predetermined distance range and/or within a predetermined duration range, in order to continue searching for an end section (6) in a second direction opposite the first direction.

10. Device according to one of the preceding claims, **characterized in that** the assembly station (10) includes a cutting tool (12) arranged to adjust, by cutting the first and second end sections (5, 6) of the braid wire (4), the respective lengths of said first and second end sections (5, 6), as well as a joining tool (11) arranged to join and fasten the first end section (5) and the second end section (6) to one another following the length adjustment thereof by the cutting tool (12), and **in that** the positioning system (20) is arranged to automatically position the braided torus (3) in relation to the cutting tool (12) then in relation to the joining tool (11), following detection of an end section (6) by the end-section sensor (60).

11. Device according to one of the preceding claims, **characterized in that** the assembly station (10) includes a crimping joining tool (11) that makes the join between the first end section (5) and the second end section (6) by crimping, onto the braid wire (4), a sleeve (14) that joins and fastens said first and second end sections (5, 6) to one another.

12. Device according to Claim 11, **characterized in that** the assembly station (10) is provided with a sleeve sensor (70) arranged to detect and verify the actual presence of the sleeve (14) on the braid wire (4) following completion of the crimping operation.

13. Device according to Claims 12 and 7, **characterized in that** the sleeve sensor (70) is an optical sensor distinct from the end-section optical sensor (60).

14. Method for positioning, in relation to a selected tracking point (O60), a braided torus (3) formed by a wire referred to as the "braid wire" (4), that extends longitudinally from a first end section (5) to a second end section (6) and that is interwoven in helical coils (7) about and along a generatrix line (L8) that forms a ring about a main axis that is the central axis (Z3) of said braided torus, said method including a projection step (a) during which the first and second end sections (5, 6) are caused to project, by elastic deformation, from the rest (3A) of the braided torus, a movement step (b) during which the braided torus (3), including the first and second projecting end sections (5, 6) thereof, is moved along a selected path, and a monitoring step (c) during which the passage of at least one of said first and second end sections (5, 6) by the selected tracking point (O60) is detected.
